# EUROPEAN PATENT APPLICATION

(11) **EP 4 525 499 A1**
(43) Date of publication of application: **19.03.2025**
(21) Application number: 23826586.2
(22) Date of filing: 25.06.2023
(51) Int. Cl.: H04W 12/06, H04W 12/08

(54) **COMMUNICATION METHOD AND APPARATUS**

(30) Priority: 25.06.2022 CN 202210728556
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); CUI, Yang, Shenzhen, Guangdong 518129 (CN)
(74) Representative: Pfenning, Meinig & Partner mbB
(86) International application number: PCT/CN2023/102209
(87) International publication number: WO 2023/246942

(57) **Abstract**

This application pertains to the field of communication technologies, and provides a communication method and apparatus, to meet a further security requirement and avoid a security risk. In the method, a first network element may trigger device authentication on a terminal, and further verify a binding relationship between a device identifier of the terminal and a user identity after device authentication on the terminal succeeds, to improve security, meet the further security requirement, and avoid the security risk.

## Description

This application claims priority to Chinese Patent Application No. 202210728556.7, filed with the China National Intellectual Property Administration on June 25, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a communication system, a device identifier may uniquely identify a mobile equipment (mobile equipment, ME) of a user. The device identifier may be specifically an identifier in a standardized format, for example, an international mobile equipment identity (international mobile equipment identity, IMEI) in a 4th generation (4th generation, 4G) mobile communication system, or a permanent equipment identifier (permanent equipment identifier, PEI) in a 5th generation (5th generation, 5G) mobile communication system. An existing standard technical specification (technical specification, TS) is used to verify the device identifier, to ensure communication security. For example, an operator network may check whether the device identifier is in a blocklist of an operator. If the device identifier is not in the blocklist of the operator, the operator network may provide a service for a terminal. If the device identifier is in the blocklist of the operator, the operator network refuses to provide a service for a terminal.

However, due to the standardized format of the device identifier, the device identifier may be forged. Consequently, a further security requirement cannot be met by verifying only the device identifier, and there is a security risk that a malicious terminal accesses the operator network.

### SUMMARY

Embodiments of this application provide a communication method and apparatus, to meet a further security requirement and avoid a security risk.

To achieve the foregoing objective, the following technical solutions are used in this application.

According to a first aspect, a communication method is provided. The method includes: A first network element triggers device authentication on a terminal, and when device authentication on the terminal succeeds, verifies, based on a preset binding relationship, whether a device identifier of the terminal matches a user identity, to trigger, based on a verification result, the network to determine whether to provide a service for the terminal. The user identity identifies a user who uses the terminal to request the service from a network.

It can be learned from the method according to the first aspect that the first network element may trigger device authentication on the terminal, and further verify the binding relationship between the device identifier of the terminal and the user identity after device authentication on the terminal succeeds, to improve security, meet a further security requirement, and avoid a security risk.

In a possible design solution, that the first network element verifies, based on a preset binding relationship, whether a device identifier of the terminal matches a user identity includes: The first network element obtains the binding relationship based on the device identifier of the terminal, to determine whether the user identity is consistent with an identity of an allowed user. The binding relationship includes the device identifier of the terminal and the identity of the allowed user, where the identity of the allowed user indicates a user allowed to use the terminal to request the service.

In a possible design solution, that the first network element verifies, based on a preset binding relationship, whether a device identifier of the terminal matches a user identity includes: The first network element obtains the binding relationship based on the user identity, to determine whether the device identifier of the terminal is consistent with an identifier of an allowed terminal. The binding relationship includes the user identity and the identifier of the terminal allowed to be used, where the identifier of the allowed terminal indicates a terminal allowed to be used by the user.

In other words, the first network element may use the device identifier to verify whether there is an identity that is of an allowed user and that matches the device identifier, or may use the user identity to verify whether there is an identifier that is of an allowed terminal and that matches the user identity. A specific manner to be used may be flexibly selected based on an actual situation.

In a possible design solution, the first network element is an access management network element, and that a first network element triggers device authentication on a terminal includes: The first network element obtains the user identity in a registration procedure of the terminal, to send a subscription data request message to a data management network element, where the subscription data request message includes the user identity. In this way, the first network element may receive a subscription information response message from the data management network element, where the subscription information response message includes the binding relationship, so that the first network element triggers device authentication on the terminal based on the binding relationship, in other words, the binding relationship may be reused to implicitly indicate the first network element to trigger device authentication on the terminal, to reduce overheads and improve communication efficiency. In addition, device authentication is triggered by reusing the registration procedure, so that it can be further ensured that the terminal is allowed to register with the network only when the authentication succeeds, to avoid a waste of resources caused by invalid registration.

In a possible design solution, the first network element is an access management network element, and that a first network element triggers device authentication on a terminal includes: The first network element obtains the user identity in a registration procedure of the terminal, and sends a subscription data request message to a data management network element, where the subscription data request message includes the user identity. In this way, the first network element may receive a subscription information response message from the data management network element, where the subscription information response message includes the binding relationship and device authentication indication information, where the device authentication indication information indicates that device authentication needs to be performed for the user, so that the first network element triggers device authentication on the terminal based on the device authentication indication information. It can be learned that device authentication is triggered by reusing the registration procedure, so that it can be further ensured that the terminal is allowed to register with the network only when the authentication succeeds, to avoid a waste of resources caused by invalid registration.

In a possible design solution, the first network element is a session management network element, and that a first network element triggers device authentication on a terminal includes: The first network element obtains the user identity in a session establishment procedure of the terminal, and sends a subscription data request message to a data management network element, where the subscription data request message includes the user identity. In this way, the first network element may receive a subscription information response message from the data management network element, where the subscription information response message includes the binding relationship, so that the first network element triggers, based on the binding relationship, an access management network element to perform device authentication on the terminal, in other words, the binding relationship may be reused to implicitly indicate the first network element to trigger device authentication on the terminal, to reduce overheads and improve communication efficiency.

In a possible design solution, the first network element is a session management network element, and that a first network element triggers device authentication on a terminal includes: The first network element obtains the user identity in a session establishment procedure of the terminal, and sends a subscription data request message to a data management network element, where the subscription data request message includes the user identity. In this way, the first network element may receive a subscription information response message from the data management network element, where the subscription information response message includes the binding relationship and device authentication indication information, where the device authentication indication information indicates that device authentication needs to be performed for the user, so that the first network element triggers, based on the device authentication indication information, an access management network element to perform device authentication on the terminal.

It can be learned that the session management network element triggers the access management network element to perform device authentication on the terminal, to avoid a case in which the session management network element performs authentication, to reduce overheads of the session management network element and improve running efficiency; or the authentication may still be performed by the session management network element, or may be performed by any other possible network element. This is not limited. In addition, device authentication is triggered by reusing the session establishment procedure, so that it can be further ensured that the terminal is allowed to establish a session only when the authentication succeeds, to avoid a waste of resources caused by establishment of an invalid session.

In a possible design solution, the first network element is an authentication, authorization, and accounting AAA server, and that a first network element triggers device authentication on a terminal includes: The first network element sends device authentication indication information to an access management network element, where the device authentication indication information is used to trigger the access management network element to perform device authentication on the terminal.

Optionally, before the first network element sends the device authentication indication information to the access management network element, the method according to the first aspect may further include: The first network element receives a slice authentication request message from the access management network element, where the slice authentication request message includes the user identity, so that the first network element determines, based on the user identity, that device authentication needs to be performed on the terminal.

Alternatively, optionally, before the first network element sends the device authentication indication information to the access management network element, the method according to the first aspect may further include: The first network element receives an extensible authentication protocol EAP authentication request message from the access management network element, where the EAP authentication request message includes the user identity, so that the first network element determines, based on the user identity, that device authentication needs to be performed on the terminal.

It can be learned that the first network element may trigger device authentication on the terminal by reusing a slice authentication procedure. In one aspect, additional signaling exchange can be avoided, and communication overheads can be reduced. In another aspect, it can be ensured that the terminal is allowed to obtain a service, for example, registration or session establishment, provided by a server function network element only when slice authentication succeeds, to avoid a waste of resources caused by providing an invalid service.

Optionally, the method according to the first aspect may further include: The first network element receives a device authentication response message from the access management network element, where the device authentication response message includes the device identifier of the terminal and an authentication result, so that the first network element determines, based on the authentication result, whether device authentication on the terminal succeeds. It can be learned that the first network element may reuse the device authentication response message during device authentication to obtain the device identifier of the terminal, and does not need to obtain the device identifier additionally by using other signaling, to reduce a quantity of interaction times and improve communication efficiency.

Optionally, that the first network element triggers, based on a verification result, the network to determine whether to provide the service for the terminal includes: The first network element sends the verification result to the access management network element, where the verification result is used to trigger the network to determine whether to provide the service for the terminal. For example, when the verification result represents that the verification succeeds, the network determines to provide the service for the terminal, to ensure network security.

In a possible design solution, the first network element is an AAA server, and that a first network element triggers device authentication on a terminal includes: The first network element sends device authentication indication information to a session management network element, where the device authentication indication information indicates that an access management network element needs to be triggered to perform device authentication on the terminal. In other words, even if the AAA server may not be able to directly communicate with the access management network element, the AAA server may still indicate the access management network element through the session management network element, to ensure that device authentication can be effectively triggered.

Optionally, before the first network element sends the device authentication indication information to the session management network element, the method according to the first aspect may further include: The first network element receives a secondary authentication request message from the session management network element, where the secondary authentication request message includes the user identity, so that the first network element determines, based on the user identity, that device authentication needs to be performed on the terminal. It can be learned that the first network element may trigger device authentication on the terminal by reusing a secondary authentication procedure. In one aspect, additional signaling exchange can be avoided, and communication overheads can be reduced. In another aspect, it can be ensured that the terminal is allowed to obtain a service, for example, registration or session establishment, provided by a server function network element only when secondary authentication succeeds, to avoid a waste of resources caused by providing an invalid service.

Optionally, the method according to the first aspect may further include: The first network element receives a device authentication response message from the session management network element, where the device authentication response message includes the device identifier of the terminal and an authentication result, so that the first network element determines, based on the authentication result, whether device authentication on the terminal succeeds. It can be learned that the first network element may reuse the device authentication response message during device authentication to obtain the device identifier of the terminal, and does not need to obtain the device identifier additionally by using other signaling, to reduce a quantity of interaction times and improve communication efficiency.

Optionally, that the first network element triggers, based on a verification result, the network to determine whether to provide the service for the terminal includes: The first network element sends the verification result to the session management network element, where the verification result is used to trigger the network to determine whether to provide the service for the terminal.

In a possible design solution, the first network element is an AAA server, and that a first network element triggers device authentication on a terminal includes: The first network element sends device authentication indication information to an authentication network element, where the device authentication indication information indicates that an access management network element needs to be triggered to perform device authentication on the terminal. In other words, even if the AAA server may not be able to directly communicate with the access management network element, the AAA server may still indicate the access management network element through the authentication network element, to ensure that device authentication can be effectively triggered.

Optionally, before the first network element sends the device authentication indication information to the authentication network element, the method according to the first aspect may further include: The first network element receives an authentication request message from the authentication network element, where the authentication request message includes the user identity, so that the first network element determines, based on the user identity, that device authentication needs to be performed on the terminal. **In** other words, the first network element may perform device authentication on the terminal during cooperating with the authentication network element to complete the authentication, or by reusing an authentication procedure, for example, a primary authentication procedure, to avoid performing another additional authentication procedure, to improve authentication efficiency.

Optionally, that the first network element, triggers, based on a verification result, the network to determine whether to provide the service for the terminal includes: The first network element sends the verification result to the authentication network element, where the verification result is used to trigger the network to determine whether to provide the service for the terminal.

In a possible design solution, that a first network element triggers device authentication on a terminal includes: The first network element sends a first device authentication request message to the terminal, and receives a first device authentication response message from the terminal, where the first device authentication response message includes the device identifier of the terminal and signature information of the device identifier of the terminal. In this way, the first network element may determine, based on the device identifier of the terminal and the signature information of the device identifier of the terminal, whether device authentication on the terminal succeeds.

Optionally, that the first network element determines, based on the device identifier of the terminal and the signature information of the device identifier of the terminal, whether device authentication on the terminal succeeds includes: The first network element sends a second device authentication request message to an authentication network element, and receives a second device authentication response message from the authentication network element. The second device authentication request includes the device identifier of the terminal and the signature information of the device identifier of the terminal, and the second device authentication response message includes an authentication result. In this way, the first network element may determine, based on the authentication result, whether device authentication on the terminal succeeds.

In a possible design solution, that a first network element, device authentication on a terminal includes: The first network element receives an authentication notification request message from an application function, where the authentication notification request message includes the user identity, so that the first network element triggers device authentication on the terminal based on the user identity. In other words, the application function may actively trigger device authentication on the terminal based on a requirement, and does not need to passively rely on a network, to improve authentication flexibility. In addition, the user identity is reused to implicitly indicate the first network element to trigger device authentication on the terminal, so that overheads can be further reduced, and communication efficiency can be improved.

Optionally, the method according to the first aspect may further include: The first network element sends an authentication notification response message to the application function, where the authentication notification response message indicates that authentication on the terminal succeeds, that is, indicates that the terminal is trusted, so that the application function can provide a corresponding service for the terminal.

Optionally, the first network element is a network element inside the network, and that the first network element triggers the network to determine whether to provide the service for the terminal includes: The first network element triggers, based on the message of the application function, the network to provide the service for the terminal. It can be learned that when the application function triggers device authentication on the terminal, whether the network provides the service for the terminal may still be indicated by the application function, to ensure that the network can provide the service as required.

According to a second aspect, a communication method is provided. The method includes: When a terminal is in an abnormal state, an application function triggers a first network element to perform device authentication on the terminal, and obtains an authentication result corresponding to device authentication on the terminal from the first network element, so that when the authentication result indicates that authentication fails, the first network element is indicated to stop providing a service for the terminal.

It can be learned from the method according to the second aspect that when perceiving that the terminal is abnormal, the application function may indicate a network side, for example, the first network element, to perform device authentication on the terminal, so that when authentication fails, the network side is indicated to stop providing the service for the terminal, to avoid a security risk.

In a possible design solution, that the authentication result indicates that authentication fails means that the authentication result indicates that device authentication on the terminal fails.

Optionally, that the authentication result indicates that authentication fails means that a device identifier of the terminal does not match a user identity.

In a possible design solution, an application function triggers a first network element to perform device authentication on the terminal includes: The application function sends an address of the terminal to the first network element, where the address of the terminal is used to trigger the first network element to perform device authentication on the terminal. In other words, the address of the terminal may be reused to implicitly indicate the first network element to perform device authentication on the terminal, to reduce overheads and improve communication efficiency, or the first network element may be triggered to perform device authentication on the terminal in any other possible manner, for example, by using a subscription concealed identifier SUCI of the terminal. This is not limited.

In a possible design solution, that a terminal is in an abnormal state includes at least one of the following: An account of the terminal is abnormal, or a service of the terminal is abnormal, to trigger device authentication on the terminal in a comprehensive manner.

In addition, for technical effects of the communication method according to the second aspect, refer to the technical effects of the communication method according to the first aspect. Details are not described herein again.

According to a third aspect, a communication apparatus is provided. The apparatus includes modules configured to perform the method according to the first aspect, for example, a transceiver module and a processing module. The transceiver module may be configured to implement a function of receiving and sending a message by the apparatus. The processing module may be configured to implement a function of the apparatus other than receiving and sending the message.

Optionally, the transceiver module may include a sending module and a receiving module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus is enabled to perform the communication method according to the first aspect.

It should be noted that the communication apparatus according to the third aspect may be a network device, for example, a first network element, may be a chip (system) or another part or component that may be disposed in the network device, or may be an apparatus including the network device. This is not limited in this application.

In addition, for technical effects of the communication apparatus according to the third aspect, refer to the technical effects of the communication method according to the first aspect. Details are not described herein again.

According to a fourth aspect, a communication apparatus is provided. The apparatus includes modules configured to perform the method according to the second aspect, for example, a transceiver module and a processing module. The transceiver module may be configured to implement a function of receiving and sending a message by the apparatus. The processing module may be configured to implement a function of the apparatus other than receiving and sending the message.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the communication method according to the second aspect.

It should be noted that the communication apparatus according to the fourth aspect may be a network device, for example, an application function, may be a chip (system) or another part or component that may be disposed in the network device, or may be an apparatus including the network device. This is not limited in this application.

In addition, for technical effects of the communication apparatus according to the fourth aspect, refer to the technical effects of the communication method according to the second aspect. Details are not described herein again.

According to a fifth aspect, a communication apparatus is provided. The communication apparatus includes a processor. The processor is configured to perform the communication method according to the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory and the processor may be integrated together, or may be disposed separately. The memory may be configured to store a computer program and/or data related to the communication method according to the first aspect or the second aspect.

In this application, the communication apparatus according to the fifth aspect may be a network device, a chip (system) or another part or component that may be disposed in the network device, or an apparatus including the network device.

In addition, for technical effects of the communication apparatus according to the fifth aspect, refer to the technical effects of the communication method according to the first aspect or the second aspect. Details are not described herein again.

According to a sixth aspect, a communication apparatus is provided. The communication apparatus includes a processor. The processor is coupled to a memory, and the processor is configured to execute a computer program stored in the memory, to enable the communication apparatus to perform the communication method according to the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In this application, the communication apparatus according to the sixth aspect may be a network device, a chip (system) or another part or component that may be disposed in the network device, or an apparatus including the network device.

In addition, for technical effects of the communication apparatus according to the sixth aspect, refer to the technical effects of the communication method according to the first aspect or the second aspect. Details are not described herein again.

According to a seventh aspect, a communication apparatus is provided, and includes a processor and a memory. The memory is configured to store a computer program. When the processor executes the computer program, the communication apparatus is enabled to perform the communication method according to the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be a network device, a chip (system) or another part or component that may be disposed in the network device, or an apparatus including the network device.

In addition, for technical effects of the communication apparatus according to the seventh aspect, refer to the technical effects of the communication method according to the first aspect or the second aspect. Details are not described herein again.

According to an eighth aspect, a communication apparatus is provided, and includes a processor. The processor is configured to: after being coupled to a memory and reading a computer program in the memory, perform the communication method according to the first aspect or the second aspect based on the computer program.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be a network device, a chip (system) or another part or component that may be disposed in the network device, or an apparatus including the network device.

In addition, for technical effects of the communication apparatus according to the eighth aspect, refer to the technical effects of the communication method according to the first aspect or the second aspect. Details are not described herein again.

According to a ninth aspect, a communication system is provided. The communication system includes the first network element according to the first aspect and/or the application function according to the second aspect.

According to a tenth aspect, a computer-readable storage medium is provided, and includes a computer program or instructions. When the computer program or the instructions are run on a computer, the computer is enabled to perform the communication method according to the first aspect or the second aspect.

According to an eleventh aspect, a computer program product is provided, and includes a computer program or instructions. When the computer program or the instructions are run on a computer, the computer is enabled to perform the communication method according to the first aspect or the second aspect.

### BRIEF DESCRIPTION OF DRAWINGS

FIG. 1 is a diagram of an architecture of a 5G system;
FIG. 2 is a diagram of an architecture of a communication system according to an embodiment of this application;
FIG. 3 is a schematic flowchart 1 of a communication method according to an embodiment of this application;
FIG. 4 is a schematic flowchart 2 of a communication method according to an embodiment of this application;
FIG. 5 is a schematic flowchart 3 of a communication method according to an embodiment of this application;
FIG. 6 is a schematic flowchart 4 of a communication method according to an embodiment of this application;
FIG. 7 is a schematic flowchart 5 of a communication method according to an embodiment of this application;
FIG. 8 is a schematic flowchart 6 of a communication method according to an embodiment of this application;
FIG. 9 is a schematic flowchart 7 of a communication method according to an embodiment of this application;
FIG. 10 is a schematic flowchart 8 of a communication method according to an embodiment of this application;
FIG. 11 is a diagram 1 of a structure of a communication apparatus according to an embodiment of this application; and
FIG. 12 is a diagram 2 of a structure of a communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system:

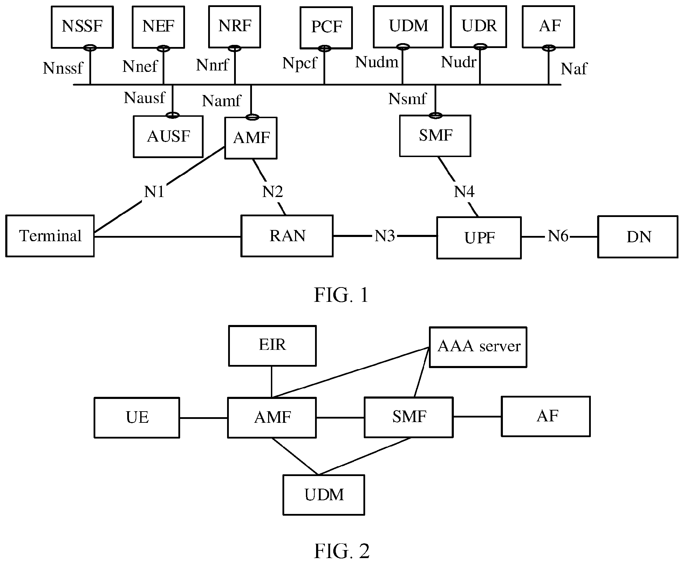

FIG. 1 is a diagram of an architecture of a 5G system. As shown in FIG. 1, the 5G system includes an access network (access network, AN) and a core network (core network, CN), and may further include a terminal.

The terminal may be a terminal having a transceiver function, or a chip or a chip system that may be disposed in the terminal. The terminal may also be referred to as a user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an uncrewed aerial vehicle (uncrewed aerial vehicle), a road side unit (road side unit, RSU) having a terminal function, or the like. Alternatively, the terminal in this application may be an in-vehicle module, an in-vehicle subassembly, an in-vehicle component, an in-vehicle chip, or an in-vehicle unit that is built in a vehicle as one or more components or units.

The AN is configured to implement an access-related function, may provide a network access function for an authorized user in a specific area, and can determine transmission links with different quality based on a user level, a service requirement, and the like, to perform transmission of user data. The AN forwards a control signal and the user data between the terminal and the CN. The AN may include an access network device, which may also be referred to as a radio access network (radio access network, RAN) device.

The RAN device may be a device that provides access for the terminal. For example, the RAN device may include a gNB in 5G, for example, a new radio (new radio, NR) system, or one or a group (including a plurality of antenna panels) of antenna panels of a base station in 5G, or may be a network node that forms a gNB, a transmission point (transmission reception point, TRP, or transmission point, TP), or a transmission measurement function (transmission measurement function, TMF), for example, a baseband unit (building baseband unit, BBU), a central unit (central unit, CU) or a distributed unit (distributed unit, DU), an RSU having a base station function, a wired access gateway, or a 5G core network element. Alternatively, the RAN device may further include an access point (access point, AP) in a wireless fidelity (wireless fidelity, Wi-Fi) system, a wireless relay node, a wireless backhaul node, various forms of macro base stations, micro base stations (also referred to as small cells), relay stations, access points, wearable devices, vehicle-mounted devices, or the like. Alternatively, the RAN device may include an access network device in a next-generation mobile communication system such as 6G, for example, a 6G base station. Alternatively, in a next-generation mobile communication system, the network device may be named in another manner, which falls within the protection scope of embodiments of this application. This is not limited in this application.

The CN is mainly responsible for maintaining subscription data of a mobile network, and provides session management, mobility management, policy management, security authentication, and another function for the terminal. The CN mainly includes the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR), an application function (application function, AF) network element, and a charging function (charging function, CHF) network element.

The UPF network element is mainly responsible for user data processing (forwarding, receiving, charging, and the like). For example, the UPF network element may receive user data from a data network (data network, DN), and forward the user data to the terminal via the access network device. The UPF network element may also receive user data from the terminal via the access network device, and forward the user data to the DN. The DN network element is an operator network that provides a data transmission service for a user, for example, an internet protocol (internet protocol, IP) multi-media service (IP multi-media service, IMS) or an internet (internet). The DN may be an external network of an operator, or may be a network controlled by an operator, and is configured to provide a business service for the terminal device.

The AUSF network element is mainly configured to perform security authentication on the terminal.

The AMF network element is mainly used for mobility management in the mobile network, for example, user location update, registration of the user with a network, and user handover.

The SMF network element is mainly used for session management in the mobile network, for example, session establishment, modification, and release. A specific function is, for example, allocating an internet protocol (internet protocol, IP) address to the user, or selecting a UPF that provides a packet forwarding function.

The PCF network element mainly supports providing a unified policy framework to control network behavior, and providing a policy rule for a control layer network function, and is responsible for obtaining policy decision-related subscription information of the user. The PCF network element may provide a policy such as a quality of service (quality of service, QoS) policy or a slice selection policy to the AMF network element and the SMF network element.

The NSSF network element is mainly configured to select a network slice for the terminal.

The NEF network element is mainly used for capability supporting and event exposure.

The UDM network element is mainly configured to store user data, for example, subscription data and authentication/authorization data.

The UDR network element is mainly configured to store structured data. Stored content includes subscription data, policy data, externally exposed structured data, and application-related data.

The AF network element mainly supports interaction with the CN to provide a service, for example, affecting a data routing decision-making and a policy control function, or providing some third-party services for a network side.

### 2. Identifier (identifier):

In a communication system, some specific identifiers may represent specific devices or users. For example, the identifiers may include a device identifier, an identifier allocated by an operator to a user, and an identifier allocated by a non-operator to the user.

The device identifier may be a device identifier of a mobile equipment (mobile equipment, ME), and may uniquely identify an ME of the user. For example, the device identifier may be specifically an international mobile equipment identity (international mobile equipment identity, IMEI) in a 4th generation (4th generation, 4G) mobile communication system, or a permanent equipment identifier (permanent equipment identifier, PEI) in a 5G system.

The identifier allocated by the operator to the user may be a unique identifier allocated by the operator to each universal subscriber identity module (universal subscriber identity module, USIM), that is, a USIM identifier or a network identity, and is used by the operator to uniquely identify a user in the communication system. For example, the network identity may be an international mobile subscriber identity (international mobile subscriber identity, IMSI) in the 4G system, or a subscription permanent identifier (subscription permanent identifier, SUPI) in the 5G system.

Different from the identifier allocated by the operator to the user, the identifier allocated by the non-operator to the user may be used by the non-operator to identify a user who uses a UE, or may be understood as a user identity (user ID) at an application layer, and is not managed or maintained in a 3rd generation partnership project (3rd generation partnership project, 3GPP). There may be different types of user identities in different scenarios. For example, for an application (application, APP), the user identity may be a user name of a registered user on the application. For a slice (slice) corresponding to an application, the user identity may be a slice authentication identifier of the slice, for example, an extensible authentication protocol identity (extensible authentication protocol identity, EAP ID). For an enterprise, the user identity may be an employee ID of an employee of the enterprise.

It may be understood that the USIM may be inserted or embedded into the ME, to form a user equipment (user equipment, UE), and the UE corresponds to a user. In this case, the device identifier of the ME may alternatively be understood as a device identifier of the UE. The USIM identifier or the network identity may alternatively be understood as a network identity of the UE. In addition, the user identity may alternatively be understood as a user identity of the UE.

### 3. Identifier authentication procedure:

The identifier authentication procedure is defined in an existing standard technical specification (technical specification, TS) 33.501, and mainly includes a USIM-based primary authentication (primary authentication) procedure and a user identity-based authentication procedure. The USIM-based primary authentication procedure is mainly used to authenticate authenticity of an SUPI or an IMSI by using a cryptographic means. The user identity-based authentication procedure is mainly used to authenticate authenticity of a user identity by using the cryptographic means. The user identity-based authentication procedure may specifically include a slice authentication (network slice-specific authentication and authorization, NSSAA) procedure, a secondary authentication (secondary authentication) procedure, an uncrewed aerial vehicle service supplier (UAV service supplier) authentication and authorization (UAV USS authentication and authorization, UUAA) procedure of an uncrewed aerial vehicle, or the like.

The existing TS also supports verification on a device identifier, for example, verifying, through an equipment identity register (equipment identity register, EIR), whether a PEI is in a blocklist of an operator, to avoid a case in which an untrusted ME (for example, a parallel imported mobile phone) accesses an operator network. For example, in TS 23.401, an MME may obtain an IMEI of an ME corresponding to a UE by using an attach procedure of the UE, and send the IMEI to the EIR. The EIR may check whether the IMEI is in the blocklist of the operator, and return a check result to the MME. If the check result represents that the IMEI is not in the blocklist of the operator, the MME continues to perform a subsequent attach procedure of the UE. Alternatively, if the check result represents that the IMEI is in the blocklist of the operator, the MME no long performs a subsequent attach procedure of the UE. For another example, in TS 23.502, an AMF network element may obtain a PEI of an ME corresponding to a UE by using a registration procedure of the UE, and send the PEI to the EIR. The EIR may check whether the PEI is in the blocklist of the operator, and return a check result to the AMF network element. If the check result represents that the PEI is not in the blocklist of the operator, the AMF network element continues to perform a subsequent registration procedure of the UE. Alternatively, if the check result represents that the PEI is in the blocklist of the operator, the AMF network element no long performs a subsequent registration procedure of the UE.

The existing TS further supports verification on a mapping relationship between the USIM and the ME, to ensure that only a UE (for example, a contract phone of the operator) having the mapping relationship can obtain a corresponding service. For example, as mentioned in TS 33.816, it may be determined, based on subscription information of a user in a home subscriber server (home subscriber server, HSS) or a UDM network element, that the mapping relationship between the USIM and the ME needs to be verified, and whether the mapping relationship complies with a permission is further verified through a corresponding network element.

### 4. 5G to business (to business, ToB):

An important application direction of a 5G system in the future is oriented to a ToB service (5G ToB). In other words, an operator establishes a 5G dedicated network (5G dedicated network) for a business (a ToB customer) in a ToB application scenario. In this case, a manner of accessing a customer network by a terminal of the ToB customer has evolved from accessing the customer network via a customer private local area network to accessing the customer network via the 5G dedicated network. In other words, the access manner introduces an additional mobility attribute, which newly adds a security exposure surface, and an additional security requirement needs to be introduced.

For example, an additional device authentication requirement is needed for a terminal that accesses the 5G dedicated network. For example, if the ToB customer (for example, an enterprise employee) uses a ToB customized terminal to access the 5G dedicated network, device authentication needs to be performed on the ToB customized terminal. Alternatively, if the ToB customer uses a terminal of the ToB customer to access the 5G dedicated network, device authentication needs to be performed on the terminal of the ToB customer. In this way, a case in which a malicious terminal accesses the 5G dedicated network, and ensure security of the 5G dedicated network can be avoided. For another example, an additional binding relationship authentication requirement is needed for a terminal that accesses the 5G dedicated network. For example, a binding relationship between a USIM identifier and a device identifier and/or a binding relationship between a user identity and a device identifier need/needs to be checked, to ensure that a specific user (for example, an enterprise employee) only uses a specific authorized device (a ToB customized terminal), a specific authorized USIM (a ToB customized USIM), and/or a specific authorized device (a ToB customized terminal) to access the 5G dedicated network, to ensure security of the 5G dedicated network.

However, an existing TS cannot meet the additional security requirement introduced in the 5G ToB scenario, and there is a corresponding security risk. For example, although TS 23.401 and TS 23.502 support an EIR in verifying a PEI or an IMEI, the verification is only to verify whether the PEI or the IMEI is in a blocklist, and authenticity of the PEI or the IMEI cannot be determined. If a malicious user forges a PEI or an IMEI based on a standardized format of the PEI or the IMEI, the 5G dedicated network cannot perform recognition. As a result, there is a security risk that the malicious terminal accesses the 5G dedicated network. In addition, although TS 33.816 supports verification on a mapping relationship between a USIM and an ME, whether the binding relationship between the user identity and the device identifier and the binding relationship between the USIM identifier and the device identifier can be further verified is not defined in the existing TS, and the security of the 5G dedicated network also cannot be ensured.

It may be understood that the foregoing 5G ToB scenario is merely an example scenario, and another scenario (for example, an industrial robot is controlled by a controller that accesses a mobile communication system in a factory) in a 5G or future communication system (for example, a 6th generation (6th generation, 6G) mobile communication system) is also applicable. This is not limited in this application.

In conclusion, for the foregoing technical problem, embodiments of this application provide the following technical solutions, to meet a further security requirement, for example, a security requirement in a 5G dedicated network scenario, and avoid a security risk. The following describes the technical solutions of this application with reference to the accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, 4G, such as a long term evolution (long term evolution, LTE) system, a worldwide interoperability for microwave access (worldwide interoperability for microwave access, WiMAX) communication system, 5G, such as a new radio (new radio, NR) system, and a future communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design solution described as an "example" in this application should not be explained as being more preferred or having more advantages than another embodiment or design solution. Exactly, the word "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

To better understand embodiments of this application, a communication system shown in FIG. 2 is first used as an example to describe in detail a communication system applicable to embodiments of this application. For example, FIG. 2 is a diagram of an architecture of the communication system to which a communication method according to an embodiment of this application is applicable.

As shown in FIG. 2, the communication system is applicable to the foregoing 5G system, and mainly includes at least one of the following: a UE (including an ME and a USIM), an AMF network element, an SMF network element, a UDM network element, an EIR, an authentication, authorization, and accounting (authentication, authorization, and accounting, AAA) server, and an AF.

In a possible scenario, the UDM network element may indicate the AMF network element/the SMF network element to trigger the EIR to perform device authentication on the terminal, and trigger the AMF network element/the SMF network element to verify whether a device identifier of the terminal is associated with a user identity. Alternatively, in a possible scenario, the AAA server may indicate the AMF network element/the SMF network element to trigger the EIR/the AAA server to perform device authentication on the terminal, and trigger the AAA server to verify whether a device identifier of the terminal is associated with a user identity. Alternatively, in a possible scenario, the AF may indicate the AMF network element/the SMF network element to trigger the EIR/the AAA server to perform device authentication on the terminal, and trigger the AMF network element/the SMF network element/the AAA server to verify whether a device identifier of the terminal is associated with a user identity. In this way, a security requirement in a scenario having a high security requirement can be met, and a security risk can be avoided.

It may be understood that the AAA server may be deployed by an operator, in other words, deployed inside the operator, and may be referred to as an internal AAA server. Alternatively, the AAA server may be deployed by an external operator, in other words, deployed outside an operator, and may be referred to as an external AAA server. Unless otherwise specified, the AAA server mentioned in this embodiment of this application may be considered as the internal AAA server, or may be considered as the external AAA server. This is not limited.

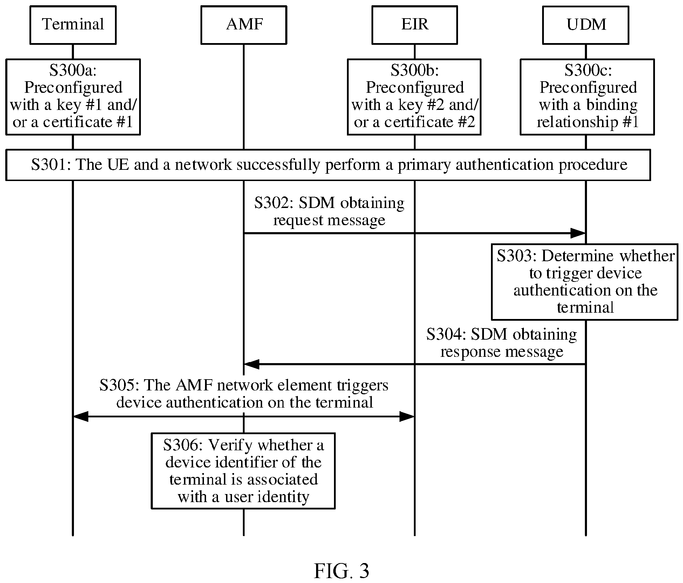

For ease of understanding, the following specifically describes an interaction procedure between the network elements/devices in the foregoing communication system by using method embodiments with reference to FIG. 3 to FIG. 10. The communication method provided in embodiments of this application is applicable to the foregoing communication system, and is specifically applied to various scenarios mentioned in the foregoing communication system. The following provides specific descriptions.

### Scenario 1:

For example, FIG. 3 is a schematic flowchart 1 of a communication method according to an embodiment of this application. In the scenario 1, an AMF network element may reuse a registration procedure, so that based on an indication of a UDM network element, the AMF network element triggers authentication on a device identifier and verification on a binding relationship #1.

Specifically, as shown in FIG. 3, a procedure of the communication method is as follows.

S300a: A terminal is preconfigured with a key #1 and/or a certificate #1.

The key #1 may be a private key corresponding to an ME in the terminal, and may be specifically a private key in an elliptic curve algorithm or a private key in an RSA algorithm or any other possible key. This is not limited. The certificate #1 may be a certificate corresponding to the ME, and may be specifically a standard digital certificate in an X.509 format or any other possible certificate. This is not limited. The key #1 and/or the certificate #1 may be used for subsequent device verification, to determine whether the ME is trusted (refer to S305).

The key #1 and/or the certificate #1 may be preconfigured on the terminal in a manner of protocol predefinition. Alternatively, a user may preconfigure the key #1 and/or the certificate #1 on the terminal through a security device (for example, a USB key/e-banking). Alternatively, the terminal may obtain or configure the key #1 and/or the certificate #1 in any other possible manner. This is not limited.

It may be understood that S300a is an optional step. For example, the terminal may alternatively perform device verification by using a key derived in a primary authentication procedure of the terminal (refer to S305).

S300b: An EIR is preconfigured with a key #2 and/or a certificate #2.

The key #2 may be a public key corresponding to the ME, in other words, a public key corresponding to the private key of the ME, and may be specifically a public key in the elliptic curve algorithm or a public key in the RSA algorithm or any other possible key. This is not specifically limited. The certificate #2 may be a certificate corresponding to the ME, and may be specifically a standard digital certificate in the X.509 format or any other possible certificate. This is not limited. The certificate #2 may be the same as or different from the certificate #1. For example, the certificate #2 corresponds to the certificate #1. The key #2 and/or the certificate #2 may also be used for subsequent device verification, to determine whether the ME is trusted (refer to S305).

The key #2 and/or the certificate #2 may be preconfigured on the EIR in the manner of protocol predefinition. Alternatively, the key #2 and/or the certificate #2 are/is prestored in subscription information of the terminal, and the subscription information of the terminal is prestored in the UDM network element. In this way, the EIR may pre-obtain the key #2 and/or the certificate #2 from the UDM network element. Alternatively, the EIR may obtain or configure the key #2 and/or the certificate #2 in any other possible manner. This is not limited.

It may be understood that S300b is an optional step. For example, the EIR may alternatively perform device verification by using the key derived in the primary authentication procedure of the terminal (refer to S305).

S300c: The UDM network element is preconfigured with the binding relationship #1.

The binding relationship #1 may be a binding relationship between an identifier of an allowed terminal and an identity of an allowed user. The identifier of the allowed terminal may indicate a terminal allowed to be used by the user. For example, the identifier of the allowed terminal may be a PEI #1 of the terminal. The identity of the allowed user may indicate a user allowed to use the terminal to request a service. For example, the identity of the allowed user may be an SUPI #1 of the terminal. Therefore, the binding relationship #1 may be a binding relationship between the PEI #1 of the terminal and the SUPI #1 of the terminal. For details of the PEI #1 and the SUPI #1, refer to the related descriptions in "2. Identifier". Details are not described again.

The binding relationship #1 may be used to trigger to perform subsequent device authentication on the terminal, or trigger to perform device authentication on a user corresponding to the terminal. Device authentication on the terminal may be authentication on a device identifier (for example, a PEI #2) of the terminal. The device identifier of the terminal is usually the same as the identifier of the allowed terminal. For example, the terminal is a normal device, and the terminal is usually configured with a device identifier allocated by a device manufacturer to the terminal. The terminal may provide the device identifier of the terminal for device authentication. In this case, the device identifier of the terminal is the same as the identifier of the allowed terminal, and device authentication succeeds. Therefore, it is determined that the ME of the terminal is trusted. Alternatively, the device identifier of the terminal may be different from the identifier of the allowed terminal. For example, the terminal is a malicious device, and the terminal may not be configured with an identifier that is of an allowed terminal and that should be originally configured. In this way, the terminal usually can provide only a device identifier different from the identifier of the allowed terminal. In this case, device authentication usually fails. Therefore, it is determined that the ME of the terminal is untrusted. Certainly, for a specific device authentication procedure, refer to related descriptions in the following S305. Details are not described.

Specifically, the binding relationship #1 may be information about a terminal granularity. In other words, the binding relationship #1 may be associated with all slices in the subscription information of the terminal. For example, the binding relationship #1 may not include a slice identifier, and it is considered by default that the binding relationship #1 is associated with all the slices in the subscription information of the terminal. On this basis, if the terminal requests a network to provide a service, regardless of whether the service is specifically a service of which slice, the UDM network element can trigger device authentication on the terminal (refer to S303). For example, the subscription information of the terminal includes a slice #1 and a slice #2, and the binding relationship #1 is associated with the slice #1 and the slice #2. Regardless of whether the terminal requests a service of the slice #1 or a service of the slice #2, the UDM network element triggers device authentication on the terminal.

Alternatively, the binding relationship #1 may be slice granularity information of the terminal. In other words, the binding relationship #1 may be associated with a specific slice in the subscription information of the terminal, for example, a slice having a high security requirement (for example, a 5G dedicated network scenario). For example, the binding relationship #1 may further include an identifier of the specific slice. In other words, the binding relationship #1 may include the identifier of the allowed terminal, the identity of the allowed user, and an identifier of a slice allowed to be used. The identifier of the specific slice may be single network slice selection assistance information (single network slice selection assistance information, S-NSSAI) or any other possible slice identifier. This is not limited. On this basis, if the terminal requests the network to provide a service of the slice, the UDM network element triggers device authentication on the terminal (refer to S303). If the terminal does not request the network to provide a service of the slice, the UDM network element does not trigger device authentication on the terminal. For example, the subscription information of the terminal includes the slice #1 and the slice #2, and the binding relationship #1 may be only associated with the slice #1. If the terminal requests the service of the slice #1, the UDM network element triggers device authentication on the terminal. If the terminal requests the service of the slice #2, the UDM network element does not trigger device authentication on the terminal.

In addition, the binding relationship #1 may alternatively be stored in the subscription information of the terminal, or may be stored in any other possible location, for example, in common information. This is not limited.

Optionally, the UDM network element may be further preconfigured with a trigger condition #1, to indicate that for a terminal that meets the trigger condition #1, the UDM network element triggers device authentication on the terminal (refer to S303).

The trigger condition #1 may include a correspondence between the identity of the allowed user and a verification requirement, for example, a correspondence between the SUPI #1 of the terminal and the verification requirement, to indicate that for a specific terminal, the UDM network element triggers device authentication on the terminal. The trigger condition #1 may be stored in the subscription information of the terminal or common information of the UDM network element. This is not limited. Alternatively, the subscription information of the terminal may include only the verification requirement, and the UDM network element considers by default that the subscription information of the terminal is associated with the identity of the allowed user.

Alternatively, the trigger condition #1 may include a correspondence between an identifier of a specific group and a verification requirement, to indicate that for a terminal in the specific group, the UDM network element triggers device authentication on the terminal. For example, if a group 1 {terminal 1, terminal 2, terminal 3} corresponds to the verification requirement, it indicates that for any terminal in the group 1, the UDM network element triggers device authentication on the terminal, but for another terminal such as a terminal 4 or a terminal 5, the UDM network element does not trigger device authentication on the terminal. The specific group may be a group including devices having a high security requirement, for example, a 5G local area network (5G local area network, 5G LAN) group, a 5G virtual network (5G virtual network, 5G VN) group, or any other possible group type. This is not limited. The trigger condition #1 may be stored in subscription information of the group or common information of the UDM network element. This is not limited. Alternatively, the subscription information of the terminal may include only the verification requirement, and the UDM network element considers by default that the subscription information of the terminal is associated with the identifier of the specific group.

Alternatively, the trigger condition #1 may include a correspondence between the identifier of the specific slice and a verification requirement, to indicate that for a terminal that requests to use the specific slice, the UDM network element triggers device authentication on the terminal. The specific slice may be a slice having a high security requirement, for example, a slice used for internet of vehicles communication. This is not limited. For example, if the slice 1 corresponds to the verification requirement, it indicates that for any terminal that requests to use the slice 1, the UDM network element triggers device authentication on the terminal, but for any terminal that requests to use another slice, for example, the slice 2, the UDM network element does not trigger device authentication on the terminal. In addition, the trigger condition #1 may be stored in common information of the UDM network element. This is not limited. Alternatively, the subscription information of the terminal may include only the verification requirement, and the UDM network element considers by default that the subscription information of the terminal is associated with the identifier of the specific slice.

Alternatively, the trigger condition #1 may include a correspondence between an identifier of a specific area (area) and a verification requirement, to indicate that for a terminal located in the specific area, the UDM network element triggers device authentication on the terminal. For example, if an identifier #1 of an area 1 corresponds to the verification requirement, it indicates that for a terminal located in the area 1, the UDM network element triggers device authentication on the terminal, but for a terminal located in another area, for example, an area 2, the UDM network element does not trigger device authentication on the terminal. The area may be an area having a high security requirement (for example, 5G dedicated network coverage). The area may represent a location of the terminal. The area may be a physical area, and identifies a physical location of the terminal. For example, the area may include one or more cells (cells). When including one cell, the area may alternatively be understood as a cell, and the area identifier may be understood as an identifier of the cell. Alternatively, the area may be a network logical area, and the network logical area may identify which network elements in the network provide services. For example, an identifier of the AMF network element indicates an area served by the AMF, in other words, the identifier of the specific area is the identifier of the AMF network element. In addition, the trigger condition #1 may be stored in common information of the UDM network element. This is not limited.

It may be understood that various correspondences in the trigger condition #1 may be separately configured, or may be configured in combination. This is not limited. For example, a correspondence between the identity of the allowed user, the identifier of the specific area, and the verification requirement is configured, to indicate that for a specific terminal in the area, the UDM network element triggers device authentication on the terminal. Certainly, alternatively, the UDM network element may not configure the trigger condition #1, and considers by default that the binding relationship #1 is used to trigger device authentication on the terminal. In addition, the trigger condition #1 is merely an example name, and may alternatively be replaced with any other possible name, for example, a verification condition or verification information. This is not limited.

S301: The terminal and the network successfully perform the primary authentication procedure.

The terminal may initiate registration with the network by using an N1 message, to cooperate with the network to perform the primary authentication procedure. For a specific implementation principle, refer to TS 23.502. Details are not described again. For the primary authentication procedure performed by the terminal and the network, refer to TS 23.501. Details are not described again.

S302: The AMF network element sends a subscriber data management (subscriber data management, SDM) obtaining request (Nudm_SDM_Get request) message to the UDM network element. Correspondingly, the UDM network element receives the SDM obtaining request message from the AMF network element.

The SDM obtaining request message may carry trigger information #1. The trigger information #1 may be used by the UDM network element to determine whether to trigger device authentication on the terminal. The trigger information #1 may be information obtained by the AMF network element by using the primary authentication procedure in S301. For example, the trigger information #1 may include a user identity, for example, an SUPI #2, to identify a user who uses the terminal to request the service from the network. The user identity may also be referred to as a user identity provided by the terminal. Optionally, the trigger information #1 may further include at least one of the following: a slice identifier, a group identifier, or an area identifier. The slice identifier may be used by the terminal to request the network to provide a service of a slice. The slice identifier may be S-NSSAI or any other possible slice identifier. This is not limited. The group identifier may indicate that the terminal belongs to a group. In this case, an SUPI of the terminal indicates that the terminal is a member in the group, and may alternatively be understood as an identifier of the member in the group. If the SDM obtaining request message does not carry the group identifier, it indicates that the terminal does not belong to a group. The area identifier may be an identifier of an area in which the terminal is currently located, to indicate that a current location of the terminal is in the area. Alternatively, the area identifier may be an identifier of a network element, for example, the AMF network element or any other network element, that currently provides a service for the terminal, to indicate that a current location of the terminal is in a service area of the network element.

S303: The UDM network element determines whether to trigger device authentication on the terminal.

In a possible manner, the UDM network element may determine, based on the binding relationship #1, whether to trigger device authentication on the terminal.

When the binding relationship #1 is the information about the terminal granularity, the UDM network element may determine, based on the user identity, whether the subscription information of the terminal includes a corresponding binding relationship #1, or determine whether the subscription information of the terminal has an identity that is of an allowed user and that is the same as the user identity, that is, determine whether the user identity of the terminal is the same as the identity of the allowed user. If there is the corresponding binding relationship #1, to be specific, the user identity is the same as the identity of the allowed user, the UDM network element determines to trigger device authentication on the terminal, and performs S304. If there is no corresponding binding relationship #1, to be specific, the user identity is different from the identity of the allowed user, the UDM network element determines not to trigger device authentication on the terminal, and performs the registration procedure. For a specific implementation, refer to TS 23.502. Details are not described again.

Alternatively, when the binding relationship #1 is the slice granularity information of the terminal, the UDM network element may first determine, based on the user identity, whether the subscription information of the terminal has a corresponding binding relationship #1. If there is no binding relationship #1, the UDM network element determines not to trigger device authentication on the terminal, and performs the registration procedure. If there is the binding relationship #1, the UDM network element may further determine whether the slice identifier is associated with a slice indicated by the binding relationship #1, or determine whether the slice identifier is the same as the identifier of the specific slice in the binding relationship #1. In this case, if the slice identifier is associated with the slice indicated by the binding relationship #1, to be specific, the slice identifier is the same as the identifier of the specific slice, the UDM network element determines to trigger device authentication on the terminal, and performs S304. If the slice identifier is not associated with the slice indicated by the binding relationship #1, to be specific, the slice identifier is different from the identifier of the specific slice, the UDM network element determines not to trigger device authentication on the terminal, and performs the registration procedure.

In another possible manner, the UDM network element may determine, based on the trigger condition #1, whether to trigger device authentication on the terminal.

When the trigger condition #1 includes the correspondence between the identity of the allowed user and the verification requirement, the UDM network element may determine, based on the user identity, whether there is a corresponding trigger condition #1, or determine whether the user identity is the same as the identity that is of the allowed user and that is in the trigger condition #1. If there is the corresponding trigger condition #1, to be specific, the user identity is the same as the identity of the allowed user, the UDM network element determines, based on the verification requirement corresponding to the identity that is of the allowed user and that is in the trigger condition #1, to trigger device authentication on the terminal, and performs S304. Alternatively, if there is no corresponding trigger condition #1, to be specific, the user identity is different from the identity of the allowed user, the UDM network element determines not to trigger device authentication on the terminal, and performs the registration procedure. Alternatively, the UDM network element may determine, based on the user identity, whether the subscription information of the terminal has a corresponding verification requirement. If there is the corresponding verification requirement, the UDM network element determines to trigger device authentication on the terminal. If there is no corresponding verification requirement, the UDM network element performs the registration procedure.

Alternatively, when the trigger condition #1 includes the correspondence between the identifier of the specific group and the verification requirement, if the SDM obtaining request message carries the group identifier, the UDM network element may determine, based on the group identifier, whether there is a corresponding trigger condition #1, or determine whether the group identifier is the same as the identifier of the specific group in the trigger condition #1. If there is the corresponding trigger condition #1, to be specific, the group identifier is the same as the identifier of the specific group, the UDM network element determines, based on the verification requirement corresponding to the identifier of the specific group in the trigger condition #1, to trigger device authentication on the terminal, and performs S304. Alternatively, if there is no corresponding trigger condition #1, to be specific, the group identifier is different from the identifier of the specific group, the UDM network element determines not to trigger device authentication on the terminal, and performs the registration procedure. Alternatively, if the SDM obtaining request message does not carry the group identifier, the UDM network element determines not to trigger device authentication on the terminal, and performs the registration procedure.

Alternatively, when the trigger condition #1 includes the correspondence between the identifier of the specific slice and the verification requirement, if the SDM obtaining request message carries the slice identifier, the UDM network element may determine, based on the slice identifier, whether there is a corresponding trigger condition #1, or determine whether the slice identifier is the same as the identifier of the specific slice in the trigger condition #1. If there is the corresponding trigger condition #1, to be specific, the group identifier is the same as the identifier of the specific group, the UDM network element determines, based on the verification requirement corresponding to the identifier of the specific slice in the trigger condition #1, to trigger device authentication on the terminal, and performs S304. Alternatively, if there is no corresponding trigger condition #1, to be specific, the slice identifier is different from the identifier of the specific slice, the UDM network element determines not to trigger device authentication on the terminal, and performs the registration procedure. Alternatively, if the SDM obtaining request message does not carry the slice identifier, the UDM network element may query a slice identifier corresponding to the user identity in the subscription information of the terminal based on the user identity in the SDM obtaining request message, to determine, based on the slice identifier, whether there is a corresponding trigger condition #1, and further determine whether to trigger device authentication on the terminal.

Alternatively, when the trigger condition #1 includes the correspondence between the identifier of the specific area and the verification requirement, if the SDM obtaining request message carries the area identifier, the UDM network element may determine, based on the area identifier, whether there is a corresponding trigger condition #1, or determine whether the area identifier is the same as the identifier of the specific area in the trigger condition #1. Alternatively, if the SDM obtaining request message does not carry the area identifier, the UDM network element may further subscribe to the current location of the terminal from the AMF network element, for example, subscribe to the identifier of the area in which the terminal is currently located, that is, the area identifier, so that the UDM network element determines whether the area identifier is the same as the identifier of the specific area in the trigger condition #1. On this basis, if there is the corresponding trigger condition #1, to be specific, the area identifier is the same as the identifier of the specific area, the UDM network element determines, based on the verification requirement corresponding to the identifier of the specific area in the trigger condition #1, to trigger device authentication on the terminal, and performs S304. If there is no corresponding trigger condition #1, to be specific, the area identifier is different from the identifier of the specific area, the UDM network element determines not to trigger device authentication on the terminal, and performs the registration procedure. Certainly, if the SDM obtaining request message does not carry location information of the terminal, the UDM network element may directly determine not to trigger device authentication on the terminal, and perform the registration procedure.

It may be understood that the foregoing various possible manners may be separately implemented, or may be implemented in combination. This is not limited. For example, the UDM network element may determine, based on the binding relationship #1 and the trigger condition #1, whether to trigger device authentication on the terminal. In this case, if both the binding relationship #1 and the trigger condition #1 are met, the UDM network element determines to trigger device authentication on the terminal. If either the binding relationship #1 or the trigger condition #1 is not met, the UDM network element performs the registration procedure.

In addition, S303 is an optional step. For example, the UDM network element may alternatively not determine whether to trigger device authentication on the terminal, and considers by default to perform S304.

It may be further understood that, that the UDM triggers device authentication on the terminal is merely an example. This is not limited. For example, the UDM may further trigger to verify whether the device identifier (for example, the PEI #2) of the terminal matches the user identity (for example, the SUPI #2). For details, refer to related descriptions in the following S306. Details are not described. Certainly, alternatively, the UDM may only trigger to verify whether the device identifier of the terminal matches the user identity. This is not limited. In this case, a prerequisite for triggering to verify whether the device identifier of the terminal matches the user identity is that device authentication on the terminal succeeds. Therefore, the AMF network element may consider by default to first trigger device authentication on the terminal, to verify whether the device identifier of the terminal matches the user identity only when device authentication succeeds.

S304: The UDM network element sends an SDM obtaining response (Nudm_SDM_Get response) message to the AMF network element. Correspondingly, the AMF network element receives the SDM obtaining response message from the UDM network element.

The UDM network element may indicate, by using the SDM obtaining response message, the AMF network element to trigger device authentication on the terminal. For example, the SDM obtaining response message may carry the binding relationship #1. The binding relationship #1 is reused to implicitly indicate the AMF network element to trigger device authentication on the terminal, or trigger to perform device authentication for the user corresponding to the terminal. Alternatively, optionally, the SDM obtaining response message may further carry indication information #1. The indication information #1 may explicitly indicate the AMF network element to trigger device authentication on the terminal, or trigger to perform device authentication for the user corresponding to the terminal.

The AMF network element may determine, based on the SDM obtaining response message, to trigger device authentication and verify whether the binding relationship #1 is trusted. If the SDM obtaining response message only indicates the AMF network element to trigger device authentication, the AMF network element may consider by default to trigger to verify whether the binding relationship #1 is trusted. For example, when device authentication succeeds, the AMF network element considers by default to trigger to verify whether the binding relationship #1 is trusted. Alternatively, if the SDM obtaining response message only indicates the AMF network element to trigger to verify whether the binding relationship #1 is trusted, the AMF network element may consider by default to trigger device authentication. For example, a prerequisite for triggering, by the AMF network element, to verify whether the binding relationship #1 is trusted is that device authentication succeeds. Therefore, the AMF network element may first trigger device authentication, to verify whether the binding relationship #1 is trusted only when device authentication succeeds.

It may be understood that the foregoing triggering manners are merely some examples. This is not limited. For another example, the SDM obtaining response message may carry only the identifier of the allowed terminal. In this case, the AMF network element may determine that the identifier of the allowed terminal is an identifier corresponding to the identity that is of the allowed user and that is in the SDM obtaining request message, that is, obtain the binding relationship #1, to determine to trigger device authentication on the terminal. Alternatively, the UDM network element may send a new message to the AMF network element, so that the AMF network element determines, based on the new message, to trigger device authentication on the terminal.

It may be further understood that the indication information #1 is merely an example name, and may alternatively be replaced with any other possible name, for example, first indication information or binding relationship #1 verification indication information. This is not limited.

S305: The AMF network element triggers device authentication on the terminal.

The AMF network element may separately send indication information #2 to the terminal and the EIR, to indicate the terminal and the EIR to cooperate to perform device authentication. The indication information #2 sent by the AMF network element to the terminal may be carried in any type of possible non-access stratum (non-access stratum, NAS) signaling. This is not limited. The indication information #2 sent by the AMF network element to the EIR may be carried in any possible service-based interface message. This is not limited. The terminal may sign the device identifier of the terminal based on the indication information #2 by using the preconfigured key #1 and/or the preconfigured certificate #1 (refer to S300a) and a cryptographic algorithm, for example, the elliptic curve algorithm, or by using a certificate in the X.509 format, to obtain signature information. The terminal may send the device identifier and the signature information of the terminal to the EIR based on an address of the EIR. The terminal is prefigured with the address of the EIR, or the AMF network element pre-sends the address of the EIR to the terminal. The EIR may determine, based on the device identifier of the terminal, that the signature information of the terminal needs to be verified by using the preconfigured key #2 and/or the preconfigured certificate #2 (refer to S300b) and the cryptographic algorithm, for example, the elliptic curve algorithm, or by using the certificate in the X.509 format, that is, authenticate the device identifier of the terminal. If verification on the signature information fails, to be specific, the device identifier of the terminal is different from the identifier of the allowed terminal, the EIR may indicate, to the AMF network element, that device authentication fails and the ME is untrusted, so that the AMF network element terminates a subsequent procedure, and the procedure ends. Alternatively, if verification on the signature information succeeds, to be specific, the device identifier of the terminal is the same as the identifier of the allowed terminal, the EIR may indicate, to the AMF network element, that device authentication succeeds and the ME is trusted, so that the AMF network element continues to perform S306.

It may be understood that the AMF network element may alternatively perform device authentication by using the key derived in the primary authentication procedure. For example, the AMF network element may derive, by using a key KAMF derived in the primary authentication procedure and the cryptographic algorithm such as a hash algorithm or an AES algorithm, a key used for device verification, and send, to the EIR, the key used for device verification. The terminal may derive, in a same manner as the AMF network element, the key used for device verification. In this way, the terminal and the EIR may perform device verification by using the key used for device verification. For a specific implementation principle of device verification, refer to the foregoing descriptions. Details are not described again. For another example, an AUSF network element may further derive, by using a key KAUSF derived by the AUSF network element in the primary authentication procedure, a key used for device verification, and send the key to the AMF network element. The terminal may derive, in a same manner as the AUSF network element, the key used for device verification. In this way, the terminal and the EIR may perform device verification by using the key used for device verification.

It may be further understood that the indication information #2 is merely an example name, and may alternatively be replaced with any other possible name, for example, second indication information or device authentication indication information. This is not limited.

S306: The AMF network element verifies whether the device identifier of the terminal matches the user identity.

When it is determined that device authentication succeeds, the AMF network element may obtain the device identifier of the terminal from the terminal, or the AMF network element may pre-obtain the device identifier of the terminal from the terminal. For example, the AMF network element obtains the device identifier of the terminal by using the N1 message in S301. This is not limited.

On this basis, the AMF network element may determine, based on the binding relationship #1, whether the device identifier of the terminal is associated with the user identity. For example, the AMF network element may obtain a corresponding binding relationship, for example, the binding relationship #1, based on the device identifier of the terminal. In this case, if the device identifier of the terminal is inconsistent with the identifier that is of the allowed terminal and that is in the binding relationship #1, the AMF network element determines that the corresponding binding relationship cannot be obtained, verification fails, and the procedure ends. If the device identifier of the terminal is consistent with the identifier that is of the allowed terminal and that is in the binding relationship #1, the AMF network element may obtain the binding relationship #1, to determine whether the user identity of the terminal is consistent with the identity that is of the allowed user and that is in the binding relationship #1. For another example, the AMF network element may obtain a corresponding binding relationship, for example, the binding relationship #1, based on the user identity of the terminal. In this case, if the user identity of the terminal is inconsistent with the identity that is of the allowed user and that is in the binding relationship #1, the AMF network element determines that the corresponding binding relationship cannot be obtained, verification fails, and the procedure ends. If the user identity of the terminal is consistent with the identity that is of the allowed user and that is in the binding relationship #1, the AMF network element may obtain the binding relationship #1, to determine whether the identifier of the terminal is consistent with the identifier that is of the allowed terminal and that is in the binding relationship #1. If the identifier of the terminal is consistent with the identifier that is of the allowed terminal and that is in the binding relationship #1, the AMF network element determines that the device identifier of the terminal is associated with the user identity, to determine that the terminal including a USIM and the ME is trusted, and continues to perform a subsequent registration procedure, to ensure that the terminal can finally access the network and obtain a corresponding service. If the identifier of the terminal is inconsistent with the identifier that is of the allowed terminal and that is in the binding relationship #1, the AMF network element determines that the device identifier of the terminal is not associated with the user identity, to indicate that the terminal including a USIM and the ME is untrusted, and the procedure ends.

Alternatively, the AMF network element may determine, based on the binding relationship #1, whether the device identifier of the terminal, the user identity, and the slice identifier are associated. Specific determining logic is similar to that in the foregoing descriptions. Details are not described again.

It may be understood that an execution sequence of S305 and S306 is not limited. For example, S306 may be performed first, and then S305 is performed when the binding relationship #1 is trusted. Alternatively, S305 and S306 may be performed independently.

It may be further understood that interaction between the AMF network element and the UDM network element is used as an example in the scenario 1. This is not limited. The UDM network element may alternatively be replaced with any other possible network element, for example, a UDR network element or a PCF network element. If the UDM network element is replaced with the PCF network element, the foregoing information such as the binding relationship #1 may be stored in policy information of the terminal. In addition, a 5G system is used as an example in the scenario 1. This is not limited. The scenario 1 is also applicable to a 4G system or a future communication system, for example, a 6G system. In this case, the AMF network element may be replaced with an MME, the UDM network element may be replaced with an HSS network element, a PEI of the ME may be replaced with an IMEI of the ME, the SUPI of the terminal may be replaced with an IMSI of the terminal, and the key KAMF may be replaced with a key KSEAF. For a specific implementation, still refer to the foregoing related descriptions. Details are not described again.

In conclusion, it can be learned from the procedure described in the scenario 1 that, based on the indication of the UDM network element, the AMF network element may trigger device authentication on the terminal and verify whether the device identifier of the terminal is associated with the user identity, to ensure that the AMF network element provides a corresponding service only when both the ME and the USIM are trusted, and avoid a security risk.

### Scenario 2:

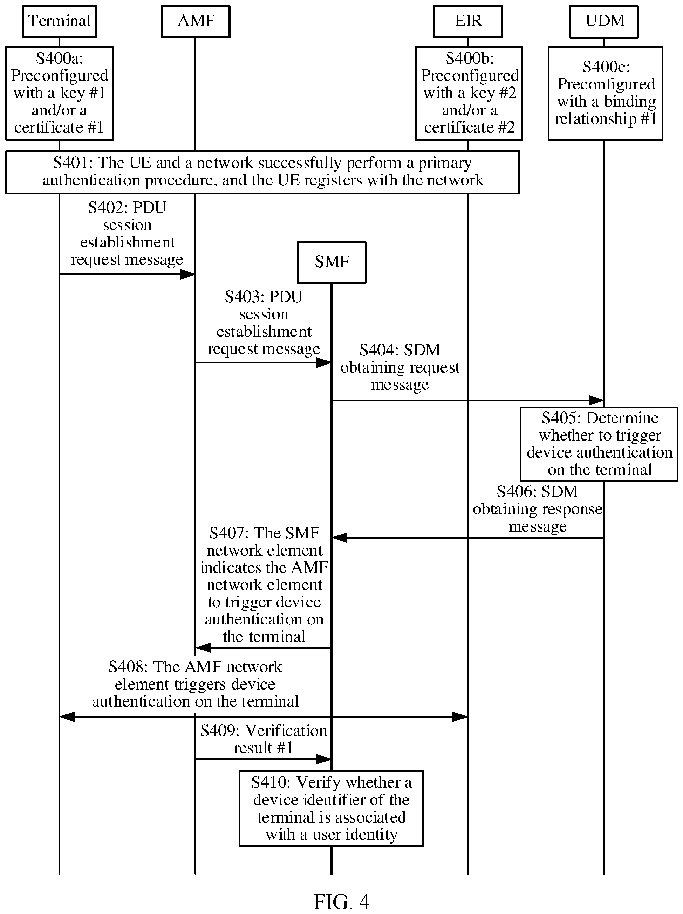

For example, FIG. 4 is a schematic flowchart 2 of a communication method according to an embodiment of this application. Different from the scenario 1, in the scenario 2, an SMF network element may reuse a session establishment procedure, so that based on an indication of a UDM network element, the SMF network element triggers device authentication on a terminal and verifies whether a device identifier of the terminal is associated with a user identity.

Specifically, as shown in FIG. 4, a procedure of the communication method is as follows.

S400a: The terminal is preconfigured with a key #1 and/or a certificate #1.

S400b: An EIR is preconfigured with a key #2 and/or a certificate #2.

For specific implementation principles of S400a and S400b, refer to the related descriptions in S300a and S300b. Details are not described again.

S400c: The UDM network element is preconfigured with a binding relationship #1.

For a specific implementation principle of the binding relationship #1, refer to the related descriptions in S300c. Details are not described again.

Optionally, the UDM network element may be further preconfigured with a trigger condition #1. The trigger condition #1 may include a correspondence between a DN name (data network name, DNN) of a specific data network (data network, DN) and a verification requirement, to indicate that for a terminal that requests to access the specific DN, the UDM network element triggers device authentication on the terminal. For example, if a DNN 1 corresponds to the verification requirement, it indicates that for any terminal that requests to access a DN 1, the UDM network element triggers device authentication on the terminal, but for any terminal that accesses another DN, the UDM network element does not trigger device authentication on the terminal. The specific DN may be a data network having a high security requirement, for example, a DN of a subscriber data center, or any other possible DN. This is not limited. The trigger condition #1 may be stored in common information of the UDM network element. This is not limited. In addition, for another possible implementation of the trigger condition #1, refer to the related descriptions in S300c. Details are not described again.

S401: The terminal and a network successfully perform a primary authentication procedure, and the terminal registers with the network.

The terminal may initiate the registration with the network by using an N1 message, to cooperate with the network to perform the primary authentication procedure. For a specific implementation principle, refer to TS 33.501. Details are not described again. Then, the terminal may register with the network by using a registration procedure. For a specific implementation principle, refer to TS 23.502. Details are not described again.

S402: The terminal sends a PDU session establishment request (PDU session establishment request) message to an AMF network element. Correspondingly, the AMF network element receives the PDU session establishment request message from the terminal.

The PDU session establishment request message is used to request to establish a PDU session. The PDU session establishment request message may include trigger information #1. For a specific implementation, refer to the related descriptions in S302. Details are not described again.

S403: The AMF network element sends a PDU session create context request (Nsmf_PDUSession_Create SMContext Request) message to the SMF network element.

The SMF network element receives the PDU session create context request message from the AMF network element.

The PDU session create context request message is used to request to create a context of the PDU session. The PDU session create context request message may include the trigger information #1. In other words, the AMF network element may obtain the trigger information #1 from the PDU session establishment request message, encapsulate the trigger information #1 into the PDU session create context request message, and then send the PDU session create context request message to the SMF network element.

S404: The SMF network element sends an SDM obtaining request message to the UDM network element through a UPF network element. Correspondingly, the UDM network element receives the SDM obtaining request message from the SMF network element through the UPF network element.

For a specific implementation principle of S404, refer to the related descriptions in S302. Details are not described again.

S405: The UDM network element determines whether to trigger device authentication on the terminal.

In a possible manner, the UDM network element may determine, based on the binding relationship #1, whether to trigger device authentication on the terminal. For a specific implementation principle, refer to the related descriptions in S303. The registration procedure is replaced with the session establishment procedure. Details are not described again.

In another possible manner, the UDM network element may determine, based on the trigger condition #1, whether to trigger device authentication on the terminal. For example, when the trigger condition #1 includes a correspondence between the DNN #1 and the verification requirement, if the SDM obtaining request message carries DN information, for example, a DN name, the UDM network element may determine, based on the DN name, whether there is a corresponding trigger condition #1, or determine whether the DN name is the same as the DN name of the specific DN in the trigger condition #1. If there is the corresponding trigger condition #1, to be specific, the DN names are the same, the UDM network element determines to trigger device authentication on the terminal, and performs S406. If there is no corresponding trigger condition #1, the UDM network element determines not to trigger device authentication on the terminal, and performs the session establishment procedure. Alternatively, if the SDM obtaining request message does not carry DN information, the UDM network element determines not to trigger device authentication on the terminal, and performs the session establishment procedure. In addition, the UDM network element may alternatively determine, based on another possible implementation of the trigger condition #1, whether to trigger device authentication on the terminal. For a specific implementation principle, refer to the related descriptions in S303. The registration procedure is replaced with the session establishment procedure. Details are not described again.

S406: The UDM network element sends an SDM obtaining response message to the SMF network element through the UPF network element. Correspondingly, the SMF network element receives the SDM obtaining response message from the UDM network element through the UPF network element.

For a specific implementation principle of S406, refer to the related descriptions in S304. Details are not described again.

S407: The SMF network element indicates the AMF network element to trigger device authentication.

The SMF network element may indicate, by using signaling, the AMF network element to trigger device authentication on the terminal. The signaling may be any possible service-based interface message or a new service-based interface message. This is not limited. Alternatively, the SMF network element may indicate, by using an information element in signaling, the AMF network element to trigger device authentication on the terminal. The information element may be any possible information element or a new information element. This is not limited.

S408: The AMF network element triggers device authentication on the terminal.

For a specific implementation principle of S408, refer to the related descriptions in S305. Details are not described again.

S409: The AMF network element sends a verification result #1 to the SMF network element. Correspondingly, the SMF network element receives the verification result #1 from the AMF network element.

The verification result #1 may indicate whether device authentication on the terminal succeeds. For example, the verification result #1 is an information element with one bit (bit), and two values 1 and 0 of the information element indicate whether device authentication on the terminal succeeds. Alternatively, the AMF network element may separately send different types of service-based interface messages to the SMF network element depending on whether device authentication on the terminal succeeds, to implicitly indicate, by using different message types, whether device authentication succeeds or fails.

Optionally, when it is determined that device authentication on the terminal succeeds, the AMF network element may further obtain the device identifier of the terminal from the terminal, and send the device identifier of the terminal to the SMF network element, so that the SMF network element uses the device identifier during subsequent verification. The device identifier of the terminal and the verification result #1 may be carried in a same message, or may be carried in different messages. This is not limited. Certainly, alternatively, the AMF network element may send the device identifier of the terminal to the SMF network element on another occasion. For example, the AMF network element may pre-obtain the device identifier of the terminal from the terminal, or be preconfigured with the device identifier of the terminal, so that the AMF network element sends the device identifier of the terminal to the SMF network element by using the PDU session create context request message in S402. This is not limited.

It may be understood that the verification result #1 is an example name, and may alternatively be replaced with any possible name, for example, a first verification result or a device verification result. This is not limited.

S410: The SMF network element verifies whether the device identifier of the terminal matches the user identity.

For a specific implementation principle of S410, refer to the related descriptions in S306. Details are not described again. In addition, if the device identifier of the terminal matches the user identity, the SMF network element determines to continue to perform a subsequent session establishment procedure, to ensure that the terminal can finally access the network and obtain a corresponding service. If the device identifier of the terminal does not match the user identity, the procedure ends.

It may be understood that an execution sequence of S407 to S409 and S410 is not limited. For example, S410 may be performed first, and then S407 to S409 are performed when the binding relationship is trusted. Alternatively, S407 to S409 and S410 may be performed independently.

It may be further understood that interaction between the SMF network element and the UDM network element is used as an example in the scenario 2. This is not limited. The UDM network element may alternatively be replaced with any other possible network element, for example, a UDR network element or a PCF network element. If the UDM network element is replaced with the PCF network element, the foregoing information such as the binding relationship #1 may be stored in policy information of the terminal. A 5G system is used as an example in the scenario 2. This is not limited. The scenario 2 is also applicable to a 4G system or a future communication system, for example, a 6G system. In this case, the SMF network element may be replaced with an MME, the UDM network element may be replaced with an HSS network element, a PEI of an ME may be replaced with an IMEI of the ME, an SUPI of the terminal may be replaced with an IMSI of the terminal, and a key KAMF may be replaced with a key KSEAF. For a specific implementation, still refer to the foregoing related descriptions. Details are not described again.

In conclusion, it can be learned from the procedure described in the scenario 2 that, based on the indication of the UDM network element, the SMF network element may trigger device authentication on the terminal and verify whether the device identifier of the terminal is associated with the user identity, to ensure that the SMF network element provides a corresponding service, for example, establishing the PDU session, only when both the ME and a USIM are trusted, and avoid a security risk.

### Scenario 3:

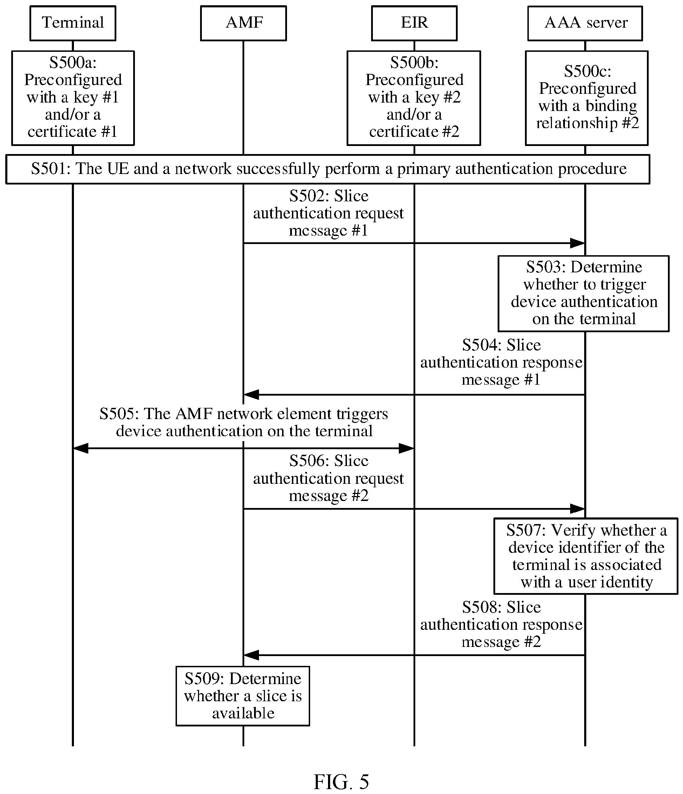

For example, FIG. 5 is a schematic flowchart 3 of a communication method according to an embodiment of this application. Different from the scenario 1 and the scenario 2, in the scenario 3, an identifier of an allowed terminal may be managed by an AAA server. Therefore, the AAA server may trigger an AMF network element to perform device authentication on a terminal, and when device authentication succeeds, the AAA server further verifies whether a device identifier of the terminal is associated with a user identity.

Specifically, as shown in FIG. 5, a procedure of the communication method is as follows.

S500a: The terminal is preconfigured with a key #1 and/or a certificate #1.

S500b: An EIR is preconfigured with a key #2 and/or a certificate #2.

For specific implementation principles of S500a and S500b, refer to the related descriptions in S300a and S300b. Details are not described again.

S500c: The AAA server is preconfigured with a binding relationship #2.

The binding relationship #2 may be a binding relationship between the identifier of the allowed terminal, for example, a PEI #1 of the terminal, and an identity of an allowed user, for example, an EAP ID #1 required for slice authentication. For the PEI #1 and the EAP ID #1, refer to the related descriptions in "2. Identifier". Details are not described again. The binding relationship #2 may be used to trigger subsequent device authentication on the terminal, or trigger to perform device authentication on a user corresponding to the terminal. For details, refer to related descriptions in the following S505. Details are not described.

Specifically, the binding relationship #2 may be information about a terminal granularity. In other words, the binding relationship #2 may be associated with all slices corresponding to the terminal. For example, the binding relationship #2 may not include a slice identifier, and it is considered by default that the binding relationship #2 is associated with all the slices corresponding to the terminal. On this basis, if the terminal requests the AAA server to provide a service, regardless of whether the service is specifically a service of which slice, the AAA server can trigger device authentication on the terminal (refer to S503). Alternatively, the binding relationship may be slice granularity information of the terminal. In other words, the binding relationship may be associated with a specific slice corresponding to the terminal, for example, a slice having a high security requirement (for example, a 5G dedicated network scenario). For example, the binding relationship #2 may further include an identifier of the specific slice. In other words, the binding relationship #2 includes the identifier of the allowed terminal, the identity of the allowed user, and the identifier of the specific slice. On this basis, if the terminal requests the AAA server to provide a service of the specific slice, the AAA server triggers device authentication on the terminal. If the terminal does not request the AAA server to provide a service of the specific slice, the AAA server does not trigger device authentication on the terminal.

Optionally, the AAA server may be further preconfigured with a trigger condition #2, to indicate that for a user that meets the trigger condition #2, the AAA server triggers device authentication on the terminal.

The trigger condition #2 may include a correspondence between the identity of the allowed user and a verification requirement, for example, a correspondence between the EAP ID #1 and the verification requirement, to indicate that for a user corresponding to the EAP ID #1, the AAA server triggers device authentication on the terminal. Alternatively, the trigger condition #2 may include a correspondence between the identifier of the specific slice and a verification requirement, to indicate that for a user that requests the service of the specific slice, the AAA server triggers device authentication on the terminal.

It may be understood that various correspondences in the trigger condition #2 may be separately configured, or may be configured in combination. This is not limited. For example, a correspondence between the identity of the allowed user, the identifier of the specific slice, and the verification requirement is configured, to indicate that for the user that is allowed to use and that requests the service of the specific slice, the AAA server to trigger device authentication on the terminal. Certainly, alternatively, the AAA server may not configure the trigger condition #2, and considers by default that the binding relationship #2 is used to trigger device authentication on the terminal. In addition, the trigger condition #2 is merely an example name, and may alternatively be replaced with any other possible name, for example, a verification condition or verification information. This is not limited.

S501: The terminal and a network successfully perform a primary authentication procedure.

The terminal may initiate registration with the network by using an N1 message, to cooperate with the network to perform the primary authentication procedure. For a specific implementation principle, refer to TS 23.502. Details are not described again.

S502: The AMF network element sends a slice authentication request (Nnssaaf_Authenticate Request) message #1 to the AAA server. Correspondingly, the AAA server receives the slice authentication request message #1 from the AMF network element.

The slice authentication request message #1 may carry trigger information #2. The trigger information #2 may be used by the AAA server to determine whether to trigger device authentication on the terminal. The trigger information #2 may be information obtained by the AMF network element by using the primary authentication procedure in S501. For example, the trigger information #2 may include the user identity and/or the slice identifier. The user identity may also be referred to as a user identity provided by the terminal, for example, an EAP ID #2 of the terminal. For a specific implementation of the slice identifier, refer to the related descriptions in S302. Details are not described again. In addition, the slice authentication request message #1 may alternatively be replaced with any other possible message, for example, an EAP authentication request message. This is not limited.

S503: The AAA server determines whether to trigger device authentication on the terminal.

In a possible manner, the AAA server may determine, based on the binding relationship #2, whether to trigger device authentication on the terminal.

When the binding relationship #2 is the information about the terminal granularity, the AAA server may determine, based on the user identity, whether there is a corresponding binding relationship #2, or determine whether the user identity is the same as the identity that is of the allowed user and that is in the binding relationship #2. If there is the corresponding binding relationship #2, to be specific, the user identity is the same as the identity of the allowed user, the AAA server determines to trigger device authentication on the terminal, and performs S504. If there is no corresponding binding relationship #2, to be specific, the user identity is different from the identity of the allowed user, the AAA server determines not to trigger device authentication on the terminal, and performs a slice authentication procedure. For a specific implementation principle, refer to TS 33.501 and TS 23.502. Details are not described again.

Alternatively, when the binding relationship #2 is the slice granularity information of the terminal, the AAA server may first determine, based on the user identity, whether there is a corresponding binding relationship #2. If there is no corresponding binding relationship #2, the AAA server determines not to trigger device authentication on the terminal, and performs a slice authentication procedure. If there is the corresponding binding relationship #2, the AAA server may further determine whether the slice identifier is associated with the binding relationship #2, or determine whether the slice identifier is the same as the identifier of the specific slice in the binding relationship #2. In this case, if the slice identifier is associated with the binding relationship #2, to be specific, the slice identifier is the same as the identifier of the specific slice, the AAA server determines to trigger device authentication on the terminal, and performs S504. If the slice identifier is not associated with the binding relationship #2, to be specific, the slice identifier is different from the identifier of the specific slice, the AAA server determines not to trigger device authentication on the terminal, and performs the slice authentication procedure. Alternatively, the AAA server may first determine, based on the slice identifier, whether there is a corresponding binding relationship #2, and then determine whether the user identity is the same as the identity of the allowed user. This is not limited.

In another possible manner, the AAA server may determine, based on the trigger condition #2, whether to trigger device authentication on the terminal.

When the trigger condition #2 includes the correspondence between the identity of the allowed user and the verification requirement, the AAA server may determine, based on the user identity, whether there is a corresponding trigger condition #2, or determine whether the user identity is the same as the identity that is of the allowed user and that is in the trigger condition #2. If there is the corresponding trigger condition #2, to be specific, the user identity is the same as the identity of the allowed user, the AAA server may determine, based on the verification requirement in the trigger condition #2, to trigger device authentication on the terminal, and perform S504. Alternatively, if there is no corresponding trigger condition #2, to be specific, the user identity is different from the identity of the allowed user, the AAA server determines not to trigger device authentication on the terminal, and performs a slice authentication procedure.

Alternatively, when the trigger condition #2 includes the correspondence between the identifier of the specific slice and the verification requirement, the AAA server may determine, based on the slice identifier, whether there is a corresponding trigger condition #2, or determine whether the slice identifier is the same as the identifier of the specific slice in the trigger condition #2. If there is the corresponding trigger condition #2, to be specific, the slice identifier is the same as the identifier of the specific slice, the AAA server may determine, based on the verification requirement in the trigger condition #2, to trigger device authentication on the terminal, and perform S504. Alternatively, if there is no corresponding trigger condition #2, to be specific, the slice identifier is different from the identifier of the specific slice, the AAA server determines not to trigger device authentication on the terminal, and performs a slice authentication procedure.

It may be understood that the foregoing various possible manners may be separately implemented, or may be implemented in combination. This is not limited. For example, the AAA server may determine, based on the binding relationship #2 and the trigger condition #2, whether to trigger device authentication on the terminal. In this case, if both the binding relationship #2 and the trigger condition #2 are met, the AAA server determines to trigger device authentication on the terminal. If either the binding relationship #2 or the trigger condition #2 is not met, the AAA server performs the slice authentication procedure.

It may be further understood that, that the AAA server triggers device authentication on the terminal is merely an example. This is not limited. The AAA server may further trigger to verify whether the device identifier (for example, a PEI #2) of the terminal matches the user identity (for example, the EAP ID #2). For details, refer to related descriptions in the following S506. Details are not described. Alternatively, the AAA server may only trigger to verify whether the device identifier of the terminal matches the user identity. This is not limited. In this case, a prerequisite for triggering to verify whether the device identifier of the terminal matches the user identity is that device authentication on the terminal succeeds. Therefore, the AAA server may consider by default to first trigger device authentication on the terminal, to verify whether the device identifier of the terminal matches the user identity only when device authentication succeeds.

S504: The AAA server sends a slice authentication response (Nnssaaf_Authenticate Response) message #1 to the AMF network element. Correspondingly, the AMF network element receives the slice authentication response message #1 from the AAA server.

The slice authentication response message #1 may be used to trigger device authentication on the terminal, or trigger to perform device authentication for the user corresponding to the terminal. For example, the slice authentication response message #1 may carry indication information #3, to trigger device authentication on the terminal by using the indication information #3. Alternatively, the AAA server may trigger device authentication on the terminal by using the slice authentication response message #1. For example, if the AAA server sends the slice authentication response message #1, it indicates to trigger device authentication on the terminal. Alternatively, if the AAA server times out and does not send the slice authentication response message #1, it indicates not to trigger device authentication on the terminal. In other words, if the AAA server determines not to trigger device authentication on the terminal, the AAA server determines not to send the slice authentication response message #1.

It may be understood that the indication information #3 is merely an example name, and may alternatively be replaced with any other possible name, for example, third indication information or device identifier authentication indication information. This is not limited.

S505: The AMF network element triggers device authentication on the terminal.

For a specific implementation of S505, refer to the related descriptions in S305. Details are not described again.

S506: The AMF network element sends a slice authentication request message #2 to the AAA server. Correspondingly, the AAA server receives the slice authentication request message #2 from the AMF network element.

The slice authentication request message #2 may indicate whether device authentication on the terminal succeeds. For example, the slice authentication request message #2 may include a verification result #2. For a specific implementation of the verification result #2, refer to the related descriptions of the foregoing verification result #1. Details are not described again. Alternatively, the AMF network element may indicate, by using the slice authentication request message #2, whether device authentication succeeds. For example, if the AAA server sends a slice authentication response message #2, it indicates that device authentication on the terminal succeeds. Alternatively, if the AAA server times out and does not send a slice authentication response message #2, it indicates that device authentication on the terminal fails.

Optionally, when determining that device authentication on the terminal succeeds, the AMF network element may further obtain the device identifier of the terminal from the terminal, and send the device identifier of the terminal to the AAA server, so that the AAA server uses the device identifier when verifying whether the binding relationship is trusted. The device identifier of the terminal may alternatively be understood as a device identifier provided by the terminal, for example, the PEI #2 of the terminal. The device identifier of the terminal and the verification result #2 may be carried in a same message, or may be carried in different messages. This is not limited. Certainly, alternatively, the AMF network element may send the device identifier of the terminal to the AAA server on another occasion. For example, the AMF network element may pre-obtain the device identifier of the terminal from the terminal, or be preconfigured with the device identifier of the terminal, so that the AMF network element can send the device identifier of the terminal to the AAA server by using the slice authentication request message in S502. This is not limited.

It may be understood that the verification result #2 is an example name, and may alternatively be replaced with any possible name, for example, a second verification result or a device identifier authentication result. This is not limited.

S507: The AAA server verifies whether the device identifier of the terminal matches the user identity.

The AAA server may determine, based on the binding relationship #2, whether the device identifier of the terminal is associated with the user identity; or determine, based on the binding relationship #2, whether the device identifier of the terminal, the user identity, and the slice identifier are associated. For details, refer to the related descriptions in S306. Details are not described again.

S508: The AAA server sends the slice authentication response message #2 to the AMF network element. Correspondingly, the AMF network element receives the slice authentication response message #2 from the AAA server.

The slice authentication response message #2 may indicate whether the device identifier of the terminal is associated with the user identity. For example, the slice authentication response message #2 may include a verification result #3. For example, the verification result #3 is an information element with one bit, and two values 1 and 0 of the information element indicate whether the device identifier of the terminal is associated with the user identity. Alternatively, the AAA server may indicate, by using the slice authentication response message #2, whether the device identifier of the terminal is associated with the user identity. For example, if the AAA server sends the slice authentication response message #2, it indicates that the device identifier of the terminal is associated with the user identity. Alternatively, if the AAA server times out and does not send the slice authentication response message #2, it indicates that the device identifier of the terminal is not associated with the user identity.

It may be understood that the verification result #3 is an example name, and may alternatively be replaced with any possible name, for example, a third verification result or a binding relationship verification result. This is not limited.

S509: The AMF network element determines whether a slice is available.

Whether the slice is available is whether the terminal can use the slice, or whether the terminal can use a service corresponding to the slice.

The AMF network element may determine, based on the verification result #3, whether a slice to be authenticated this time is available. For example, if the verification result #3 indicates that the binding relationship is trusted, the AMF network element determines that the slice to be authenticated this time is available. Alternatively, if the verification result #3 indicates that the binding relationship is untrusted, the AMF network element determines that the slice to be authenticated this time is unavailable.

It may be understood that the AMF network element may initiate authentication on a plurality of slices for one terminal, in other words, S502 to S509 may be performed for a plurality of times. In this case, the AMF network element may store the verification result #2 (S505) obtained for the first time, so that when device authentication needs to be performed again subsequently, the AMF network element may directly provide the verification result #2 for the AAA server, and does not need to perform device authentication again, to reduce overheads. In addition, in a process in which the AMF network element initiates authentication on the plurality of slices for one terminal, if the AMF network element determines that the plurality of slices are all unavailable, and determines that the terminal has no available slice (where this condition is optional), the AMF network element may perform a deregistration procedure on the terminal, to disconnect the terminal from the network. For a specific implementation, refer to TS 23.502. Details are not described again. Alternatively, in a process in which the AMF network element initiates authentication on the plurality of slices for one terminal, if determining that any slice is unavailable or a quantity of unavailable slices exceeds a preset quantity, the AMF network element may perform a deregistration procedure on the terminal. This is not limited.

It may be further understood that a 5G system is used as an example in the scenario 3. This is not limited. The scenario 3 is also applicable to a 4G system or a future communication system, for example, a 6G system. In this case, the AMF network element may be replaced with an MME, a PEI of an ME may be replaced with an IMEI of the ME, and a key KAMF may be replaced with a key KSEAF. For a specific implementation, refer to the foregoing related descriptions. Details are not described again.

In conclusion, it can be learned from the procedure described in the scenario 3 that, the AAA server may trigger device authentication on the terminal, and verify whether the device identifier of the terminal is associated with the user identity, to ensure that the AAA server provides a corresponding service only when both a user and a terminal corresponding to the user are trusted, and avoid a security risk.

### Scenario 4:

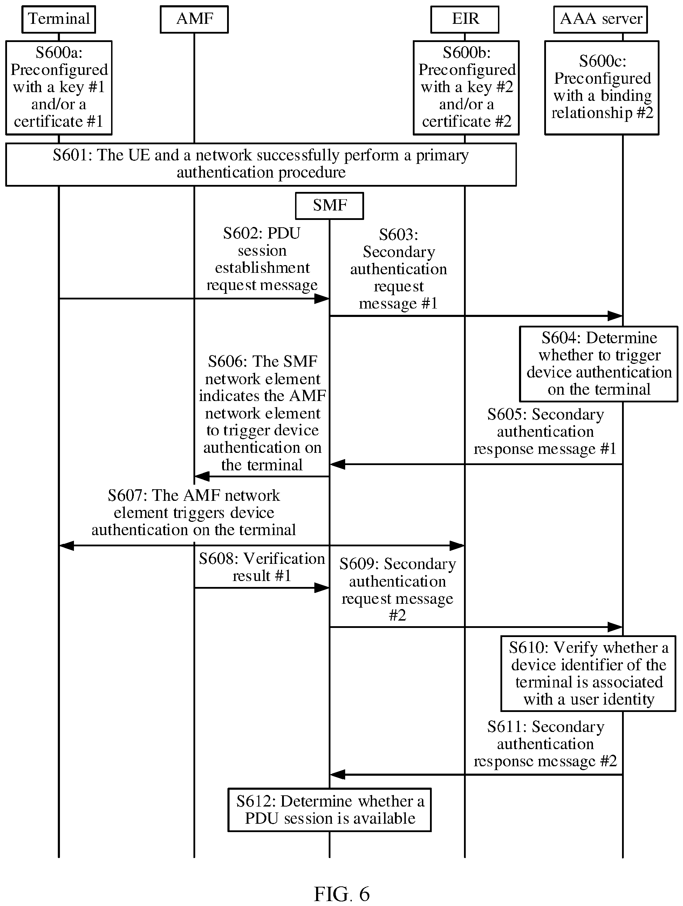

For example, FIG. 6 is a schematic flowchart 4 of a communication method according to an embodiment of this application. Different from the scenario 3, in the scenario 4, an AAA server reuses a secondary authentication procedure, to indicate an SMF network element to trigger device authentication on a terminal, and when device authentication succeeds, the AAA server further verifies whether a device identifier of the terminal is associated with a user identity.

Specifically, as shown in FIG. 6, a procedure of the communication method is as follows.

S600a: The terminal is preconfigured with a key #1 and/or a certificate #1.

S600b: An EIR is preconfigured with a key #2 and/or a certificate #2.

For specific implementations of S600a and S600b, refer to the related descriptions in S300a and S300b. Details are not described again.

S600c: The AAA server is preconfigured with a binding relationship #2.

For a specific implementation of S600c, refer to the related descriptions in S500c. Details are not described again. However, different from S500c, an identity that is of an allowed user and that is in the binding relationship #2 may be an identifier of secondary authentication.

S601: The terminal and a network successfully perform a primary authentication procedure.

The terminal may initiate registration with the network by using an N1 message, to cooperate with the network to perform the primary authentication procedure. For a specific implementation, refer to TS 23.502. Details are not described again.

S602: The terminal sends a PDU session establishment request message to the SMF network element. Correspondingly, the SMF network element receives the PDU session establishment request message from the terminal.

The PDU session establishment request message is used to request to establish a PDU session. The PDU session establishment request message may include trigger information #2. For a specific implementation, refer to the related descriptions in S502. Details are not described again.

S603: The SMF network element sends a secondary authentication request (Authentication/Authorisation Request) message #1 to the AAA server. Correspondingly, the AAA server receives the secondary authentication request message #1 from the SMF network element.

The secondary authentication request message #1 may be used to request to perform secondary authentication on a specified PDU session, to determine whether the PDU session is available. Whether the PDU session is available may be whether the terminal can use a service of the PDU session. For example, if a result of secondary authentication is a success, it indicates that the terminal can use the service of the PDU session. If a result of secondary authentication is a failure, it indicates that the terminal cannot use the service of the PDU session. The secondary authentication request message #1 may include the trigger information #2. In other words, the SMF network element may obtain the trigger information #2 from a PDU session establishment request message #1, encapsulate the trigger information #2 into the secondary authentication request message, and then send the secondary authentication request message #1 to the AAA server.

S604: The AAA server determines whether to trigger device authentication on the terminal.

For a specific implementation of S604, refer to the related descriptions in S503. A slice authentication procedure may be replaced with a secondary authentication procedure. Details are not described again.

S605: The AAA server sends a secondary authentication response (Authentication/Authorisation Response) message #1 to the SMF network element. Correspondingly, the SMF network element receives the secondary authentication response message #1 from the AAA server.

The secondary authentication response message #1 may be used to trigger device authentication. For example, the secondary authentication response message #1 may carry indication information #4, to trigger device authentication by using the indication information #4, or the secondary authentication response message #1 may be used to trigger device authentication. A specific implementation is similar to that of S504. For understanding, refer to S504. Details are not described again.

It may be understood that the indication information #4 is merely an example name, and may alternatively be replaced with any other possible name, for example, fourth indication information or device verification indication information. This is not limited.

S606: The SMF network element indicates an AMF network element to trigger device authentication on the terminal.

S607: The AMF network element triggers device authentication on the terminal.

S608: The AMF network element sends a verification result #1 to the SMF network element. Correspondingly, the SMF network element receives the verification result #1 from the AMF network element.

Specific implementations of S606 to S608 are similar to those of S407 to S409. For understanding, refer to S407 to S409. Details are not described again.

S609: The SMF network element sends a secondary authentication request message #2 to the AAA server. Correspondingly, the AAA server receives the secondary authentication request message #2 from the SMF network element.

The secondary authentication request message #2 may indicate whether device authentication on the terminal succeeds. For example, the secondary authentication request message #2 may include the verification result #1, to indicate, by using the verification result #1, whether device authentication on the terminal succeeds, or the secondary authentication request message #2 may indicate whether device authentication on the terminal succeeds. In addition, for a specific implementation of S609, refer to the related descriptions in S506. Details are not described again.

S610: The AAA server verifies whether the device identifier of the terminal matches the user identity.

For a specific implementation of S610, refer to the related descriptions in S507. Details are not described again.

S611: The AAA server sends a secondary authentication response message #2 to the SMF network element. Correspondingly, the SMF network element receives the secondary authentication response message #2 from the AAA server.

The secondary authentication response message #2 may indicate whether the device identifier of the terminal matches the user identity. For example, the secondary authentication response message #2 may include a verification result #4, to indicate, by using the verification result #4, whether the device identifier of the terminal matches the user identity; or the secondary authentication response message #2 may indicate whether the device identifier of the terminal matches the user identity. For a specific implementation, refer to the related descriptions in S509. Details are not described again.

It may be understood that the verification result #4 is an example name, and may alternatively be replaced with any possible name, for example, a fourth verification result or a binding relationship verification result. This is not limited.

S612: The SMF network element determines whether the PDU session is available.

The SMF network element may determine, based on the verification result #4, whether the PDU session is available. For example, if the verification result #4 indicates that the device identifier of the terminal matches the user identity, the SMF network element determines that the PDU session is available, and establishes a corresponding PDU session. Alternatively, if the verification result #4 indicates that the device identifier of the terminal does not match the user identity, the SMF network element determines that the PDU session is unavailable, and the procedure ends.

It may be understood that a 5G system is used as an example in the scenario 4. This is not limited. The scenario 4 is also applicable to a 4G system or a future communication system, for example, a 6G system. In this case, the SMF network element may be replaced with an MME, a PEI of an ME may be replaced with an IMEI of the ME, and a key KAMF may be replaced with a key KSEAF. For a specific implementation, refer to the foregoing related descriptions. Details are not described again.

In conclusion, it can be learned from the procedure described in the scenario 4 that, the AAA server may trigger device authentication on the terminal, and verify whether the device identifier of the terminal is associated with the user identity, to ensure that the AAA server provides a corresponding service only when both a user and a terminal corresponding to the user are trusted, and avoid a security risk.

### Scenario 5:

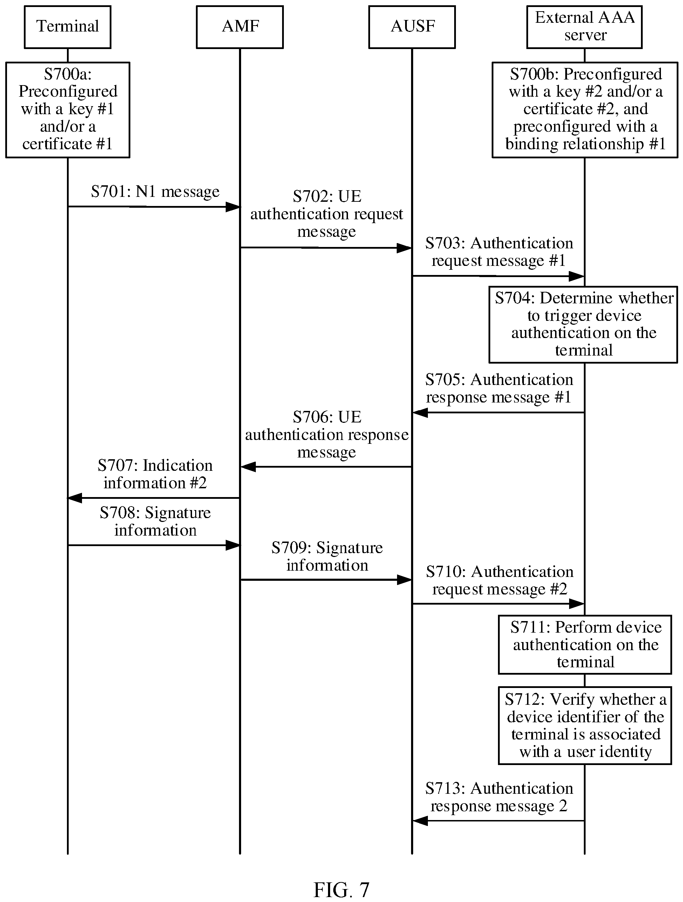

For example, FIG. 7 is a schematic flowchart 5 of a communication method according to an embodiment of this application. Different from the foregoing scenarios, in the scenario 5, an AAA server does not belong to an operator network, in other words, the AAA server is an external AAA server. In this case, both device authentication on a terminal and verification on whether a device identifier of the terminal is associated with a user identity may be performed by the external AAA server.

Specifically, as shown in FIG. 7, a procedure of the communication method is as follows.

S700a: Preconfigure a key #1 and/or a certificate #1 on the terminal.

For a specific implementation of S700a, refer to the related descriptions in S300a. Details are not described again.

S700b: The external AAA server is preconfigured with a key #2 and/or a certificate #2, and the external AAA server is further preconfigured with a binding relationship #1.

For specific implementations of the key #2 and/or the certificate #2, refer to the related descriptions in S300b. Details are not described again. The binding relationship #1 may be used to trigger subsequent device authentication on the terminal. For a specific implementation, refer to the related descriptions in S300c. Details are not described again.

Optionally, the external AAA server may be further preconfigured with a trigger condition #3, to indicate that for a terminal that meets the trigger condition #3, the external AAA server triggers device authentication on the terminal. For example, the trigger condition #3 may include a correspondence between an identity of an allowed user and a verification requirement, to indicate that for a specific user, the external AAA server triggers device authentication on the terminal, or triggers to perform device authentication on a user corresponding to the terminal.

It may be understood that the trigger condition #3 is merely an example name, and may alternatively be replaced with any other possible name, for example, a verification condition or verification information. This is not limited.

S701: The terminal sends an N1 message to an AMF network element. Correspondingly, the AMF network element receives the N1 message from the terminal.

The N1 message may be used by the terminal to request to register with a network, and may include a user temporary identity of the terminal, for example, a subscription concealed identifier (user concealed identifier, SUCI).

S702: The AMF network element sends a terminal authentication request (Nausf_UE Authentication Request) message to an AUSF network element. Correspondingly, the AUSF network element receives the terminal authentication request message from the AMF network element.

The terminal authentication request message may be used to request the external AAA server to authenticate the terminal, or trigger a primary authentication procedure of the terminal. The terminal authentication request message may include the user identity of the terminal. For the user identity of the terminal, refer to the foregoing related descriptions. Details are not described again. For example, if the AMF network element is preconfigured with the user identity of the terminal, the AMF network element may encapsulate the user identity of the terminal into the terminal authentication request message based on the user temporary identity of the terminal in the N1 message. Alternatively, if the AMF network element does not preconfigure the user identity of the terminal, the AMF network element may encapsulate the user temporary identity of the terminal in the N1 message into the terminal authentication request message.

S703: The AUSF network element sends an authentication request (Authentication Request) message #1 to the external AAA server. Correspondingly, the external AAA server receives the authentication request message #1 from the AUSF network element.

The authentication request message #1 may be used to request the external AAA server to authenticate the terminal. The authentication request message #1 may include the user identity of the terminal. For example, when the terminal authentication request message carries the user identity of the terminal, the AUSF network element may encapsulate the user identity of the terminal in the terminal authentication request message into the authentication request message #1, and then send the authentication request message #1 to the external AAA server. Alternatively, when the terminal authentication request message carries the user temporary identity of the terminal, the AUSF network element may request, from a UDM network element based on the user temporary identity of the terminal, to obtain the user identity of the terminal. For a specific procedure, refer to TS 33.501. Then, the AUSF network element may encapsulate the user identity of the terminal into the authentication request message #1, and then send the authentication request message #1 to the external AAA server.

S704: The external AAA server determines whether to trigger device authentication on the terminal.

In a possible manner, the external AAA server may determine, based on the binding relationship #1, whether to trigger device authentication on the terminal. For example, the external AAA server may determine, based on the user identity of the terminal, whether there is a corresponding binding relationship #1, or determine whether the user identity is the same as the identity that is of the allowed user and that is in the binding relationship #1. If there is the corresponding binding relationship #1, to be specific, the user identity is the same as the identity of the allowed user, the external AAA server determines to trigger device authentication on the terminal, and performs S705. If there is no corresponding binding relationship #1, to be specific, the user identity is different from the identity of the allowed user, the external AAA server determines not to trigger device authentication on the terminal, and performs a conventional primary authentication procedure. For a specific implementation, refer to TS 33.501. Details are not described again.

In another possible manner, the external AAA server may determine, based on the trigger condition #3, whether to trigger device authentication on the terminal. For example, the external AAA server may determine, based on the user identity of the terminal, whether there is a corresponding trigger condition #3, or determine whether the user identity is the same as the identity that is of the allowed user and that is in the trigger condition #3. If there is the corresponding trigger condition #3, to be specific, the user identity is the same as the identity of the allowed user, the external AAA server may determine, based on the verification requirement in the trigger condition #3, to trigger device authentication on the terminal, and perform S705. Alternatively, if there is no corresponding trigger condition #3, to be specific, the user identity is different from the identity of the allowed user, the external AAA server determines not to trigger device authentication on the terminal, and performs a conventional primary authentication procedure.

S705: The external AAA server sends an authentication response (Authentication Response) message #1 to the AUSF network element. Correspondingly, the AUSF network element receives the authentication response message #1 from the external AAA server.

The authentication response message #1 may be used to trigger device authentication on the terminal, or trigger to perform device authentication for the user corresponding to the terminal. For example, the authentication response message #1 may carry indication information #5, to trigger device authentication on the terminal by using the indication information #5. Alternatively, the external AAA server may trigger device authentication on the terminal by using the authentication response message #1. For example, if the external AAA server sends the authentication response message #1, it indicates to trigger device authentication on the terminal. Alternatively, if the external AAA server times out and does not send the authentication response message #1, it indicates not to trigger device authentication on the terminal.

It may be understood that the indication information #5 is merely an example name, and may alternatively be replaced with any other possible name, for example, fifth indication information or device verification indication information. This is not limited.

S706: The AUSF network element sends a terminal authentication response (Nausf_UE Authentication Response) message to the AMF network element. Correspondingly, the AMF network element receives the terminal authentication response message from the AUSF network element.

The terminal authentication response message may be used to trigger device authentication. The terminal authentication response message may carry the indication information #5. In other words, the AUSF network element may encapsulate the indication information #5 in the authentication response message #1 into the terminal authentication response message, and then send the terminal authentication response message to the AMF network element. Alternatively, the AUSF network element may trigger device authentication on the terminal by using the terminal authentication response message. In other words, if the AUSF network element sends the terminal authentication response message, it indicates to trigger device authentication on the terminal. For example, the AUSF network element determines, based on the indication information #5 in the authentication response message #1 or based on the received authentication response message #1, to trigger device authentication on the terminal, so as to send the terminal authentication response message to the AMF network element. However, if the AUSF network element times out and still does not send the terminal authentication response message, it indicates not to trigger device authentication on the terminal.

S707: The AMF network element sends indication information #2 to the terminal. Correspondingly, the terminal receives the indication information #2 from the AMF network element.

For a specific implementation of the indication information #2, refer to the related descriptions in S305. Details are not described again. The terminal may sign the device identifier based on the indication information #2 by using the preconfigured key #1 and/or the preconfigured certificate #1 and a cryptographic algorithm, for example, an elliptic curve algorithm, or by using a certificate in an X.509 format, to obtain signature information.

S708: The terminal sends the signature information to the AMF network element. Correspondingly, the AMF network element receives the signature information from the terminal.

The signature information may be carried in any type of possible NAS signaling. This is not limited. Optionally, the terminal may further provide the device identifier of the terminal, for example, send the device identifier of the terminal to the AMF network element, to subsequently verify whether a binding relationship is trusted for use. The device identifier of the terminal and the signature information may be carried in same NAS signaling, or may be carried in different NAS signaling. This is not limited. Alternatively, the terminal may not provide the device identifier of the terminal, and the AUSF network element determines the device identifier of the terminal in a process of authenticating the identifier of the allowed terminal. For a specific implementation, refer to related descriptions in the following S711. Details are not described.

S709: The AMF network element sends the signature information to the AUSF network element. Correspondingly, the AUSF network element receives the signature information from the AMF network element.

After receiving the signature information from the terminal, the AMF network element may send the signature information to the AUSF network element by using any possible service-based interface message. Optionally, after receiving the device identifier of the terminal, the AMF network element may also send the device identifier of the terminal to the AUSF network element by using any possible service-based interface message. The device identifier of the terminal and the signature information may be carried in a same service-based interface message, or may be carried in different service-based interface messages. This is not limited.

S710: The AUSF network element sends an authentication request message #2 to the external AAA server. Correspondingly, the external AAA server receives the authentication request message #2 from the AUSF network element.

The authentication request message #2 may be used by the external AAA server to perform device authentication on the terminal. For example, the authentication request message #2 may include the signature information. Optionally, the authentication request message #2 may further include the device identifier of the terminal. Alternatively, the signature information and the device identifier of the terminal may be carried in different authentication request messages. This is not limited.

S711: The external AAA server performs device authentication on the terminal.

A principle of performing device authentication on the terminal by the external AAA server is similar to that in the related descriptions in S305. For understanding, refer to S305. Details are not described again. In this case, if determining that device authentication on the terminal succeeds, the external AAA server verifies whether the device identifier of the terminal is associated with the user identity, and performs S712. Optionally, when device authentication on the terminal succeeds, the AUSF network element may further determine the device identifier of the terminal. For example, if verification on the signature information succeeds, for example, the signature information is successfully decrypted, the AUSF network element may obtain the identifier of the allowed terminal. In this case, the identifier of the allowed terminal is the device identifier of the terminal. Certainly, if the external AAA server determines that authentication on the device identifier of the terminal fails, the external AAA server skips S712 and performs S713, to notify the network of a result of the authentication failure.

S712: The external AAA server verifies whether the device identifier of the terminal is associated with the user identity.

A principle of verifying, by the external AAA server, whether the device identifier of the terminal is associated with the user identity is similar to that in the related descriptions in S306. For understanding, refer to S306. Details are not described again.

S713: The external AAA server sends an authentication response message #2 to the AUSF network element. Correspondingly, the AUSF network element receives the authentication response message #2 from the external AAA server.

Because the network may not perceive a specific case of whether device authentication on the terminal succeeds or whether the device identifier of the terminal is associated with the user identity, the authentication response message #2 may indicate that overall verification succeeds or fails. For example, the authentication response message #2 may carry a verification result #5. The verification result #5 may be an information element with one bit, to indicate the two cases by using two values of the bit. Certainly, alternatively, the verification result #5 may indicate specific cases, for example, indicate whether device authentication on the terminal succeeds and whether the device identifier of the terminal is associated with the user identity. This is not limited. In addition, the verification result #5 is an example name, and may alternatively be replaced with any possible name, for example, a fifth verification result or an authentication result. This is not limited.

Correspondingly, the AUSF network element may determine, based on the verification result #5, whether to continue to perform a subsequent procedure. For example, if the verification result #5 indicates that verification succeeds, for example, device authentication on the terminal succeeds, and the device identifier of the terminal is associated with the user identity, the AUSF network element determines that verification succeeds, which may alternatively be understood as determining that primary authentication succeeds, so that the subsequent procedure, for example, a registration procedure and a session establishment procedure, can be triggered. If the verification result #5 indicates that verification fails, for example, device authentication on the terminal fails, or device authentication on the terminal succeeds but the device identifier of the terminal is not associated with the user identity, the AUSF network element determines that verification fails, which may alternatively be understood as determining that primary authentication fails, the procedure ends, and the terminal is not allowed to register with the network.

In conclusion, it can be learned from the procedure described in the scenario 5 that, the external AAA server performs device authentication on the terminal, and verifies whether the device identifier of the terminal is associated with the user identity, to ensure that the external AAA server provides a corresponding service only when both an ME and a USIM are trusted, and avoid a security risk.

### Scenario 6:

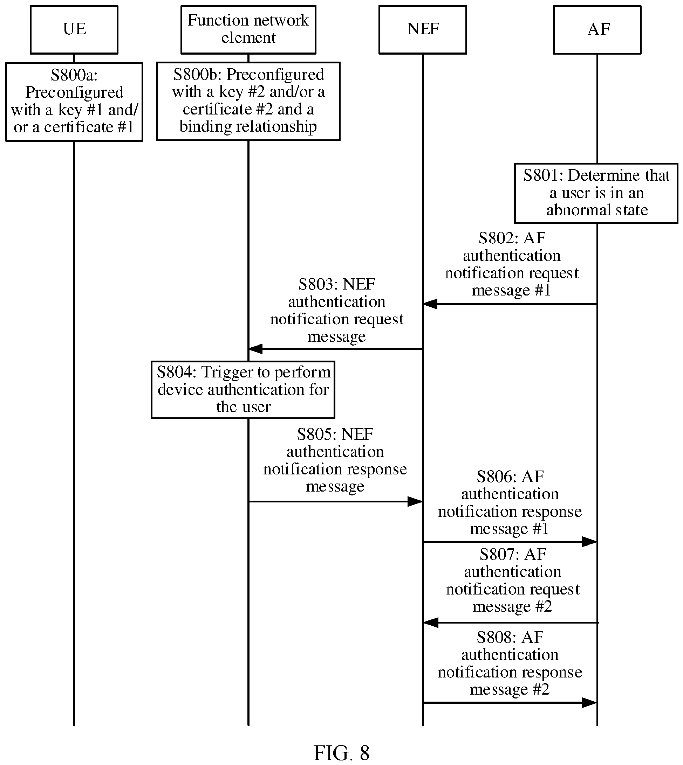

For example, FIG. 8 is a schematic flowchart 6 of a communication method according to an embodiment of this application. Different from the foregoing scenarios, in the scenario 6, an AF may trigger a network to perform device authentication on a terminal.

Specifically, as shown in FIG. 8, a procedure of the communication method is as follows.

S800a: The terminal is preconfigured with a key #1 and/or a certificate #1.

For a specific implementation of S800a, refer to the related descriptions in S300a. Details are not described again.

S800b: A network function is preconfigured with a key #2 and/or a certificate #2, and a binding relationship.

The network function is applicable to the scenario 1, and includes an EIR, an AMF network element, and a UDM network element; or is applicable to the scenario 2, and includes an EIR, an SMF network element, and a UDM network element. In this case, for a specific implementation of S800b, refer to the related descriptions of S300b and S300c. Details are not described again. Alternatively, the network function is applicable to the scenario 3, and includes an EIR, an AMF network element, and an AAA server; or is applicable to the scenario 4, and includes an SMF network element, an AUSF network element, and an external AAA server. In this case, for a specific implementation of S800b, refer to the related descriptions of S500b and S500c. Details are not described again. Alternatively, the network function is applicable to the scenario 5, and includes an external AAA server. In this case, for a specific implementation of S800b, refer to the related descriptions of S700b. Details are not described again.

S801: The AF determines that a user is in an abnormal state.

That a user is in an abnormal state may include at least one of the following: An account of the user is in an abnormal state, for example, an account of a same user is repeatedly logged in; or a service of the user is in an abnormal state, for example, service traffic is abnormal. This is not limited. When determining that the user is in the abnormal state, the AF may trigger to perform device authentication for the user, or trigger device authentication on a terminal corresponding to the user, that is, perform S802. Optionally, the AF may alternatively trigger, based on a local configuration in any case, to perform device authentication for the user. The local configuration of the AF may be triggering, at a specific time point, to perform device authentication for the user. This is not limited.

S802: The AF sends an AF authentication notification request (Naf_Auth_Notification Request) message #1 to an NEF network element. Correspondingly, the NEF network element receives the AF authentication notification request message #1 from the AF.

The AF authentication notification request message #1 may be used to trigger to perform device authentication for the user. For example, the AF authentication notification request message #1 may include an address of the user, for example, an IP address, and optionally, may further include indication information #6. The indication information #6 may be used to trigger to perform device authentication for the user. Certainly, if the AF authentication notification request message #1 does not carry the indication information #6, the address of the user may be further used to implicitly trigger to perform device authentication for the user.

It may be understood that the indication information #6 is merely an example name, and may alternatively be replaced with any other possible name, for example, sixth indication information or authentication indication information. This is not limited. In addition, when the account is repeatedly logged in, the same user can have a plurality of addresses. In this case, processing logic of the network for each address is roughly the same. For ease of understanding, the following uses one of the addresses as an example for description.

S803: The NEF network element sends an NEF authentication notification request (Nnef_Auth_Notification Request) message to the network function. Correspondingly, the network function receives the NEF authentication notification request message from the NEF network element.

The NEF authentication notification request message may be used to trigger to perform device authentication for the user. For example, the NEF authentication notification request message may include a user identity corresponding to the address of the user, for example, an SUPI of the terminal, and optionally, may further include the indication information #6. In other words, the NEF network element may obtain the address of the user from the AF authentication notification request message #1, to determine the user identity corresponding to the address of the user, and encapsulate the user identity into the NEF authentication notification request message. Optionally, if the AF authentication notification request message #1 further includes the indication information #6, the NEF network element may further encapsulate the indication information #6 into the NEF authentication notification request message, to trigger to perform device authentication for the user. Certainly, if the AF authentication notification request message #1 does not carry the indication information #6, a device identifier may be used to implicitly trigger to perform device authentication for the user.

It may be understood that if the network function includes the AMF network element in the scenario 1 or the scenario 3, the NEF network element sends the NEF authentication notification request message to the AMF network element. Alternatively, if the network function includes the SMF network element in the scenario 2 or the scenario 4, the NEF network element sends the NEF authentication notification request message to the SMF network element. Alternatively, if the network function includes the external AAA server in the scenario 5, the NEF network element sends the NEF authentication notification request message to the external AAA server.

S804: The network function triggers to perform device authentication for the user.

The network function is applicable to any one of the scenario 1 to the scenario 5. For a specific implementation of S804, refer to the related descriptions of the scenario. Details are not described again.

S805: The network function sends an NEF authentication notification response (Nnef_Auth_Notification Response) message to the NEF network element. Correspondingly, the NEF network element receives the NEF authentication notification response message from the network function.

The NEF authentication notification response message may indicate whether device authentication on the terminal corresponding to the user succeeds, and whether the device identifier of the terminal corresponding to the user is associated with the user identity. For example, the NEF authentication notification response message may include the user identity and a verification result #6, to indicate whether device authentication on the terminal corresponding to the user succeeds, and whether the device identifier of the terminal corresponding to the user is associated with the user identity.

It may be understood that if the AF does not perceive a specific case of whether device authentication on the terminal corresponding to the user succeeds or whether the device identifier of the terminal corresponding to the user is associated with the user identity, the NEF authentication notification response message may also indicate that overall authentication succeeds or fails. In addition, the verification result #6 is an example name, and may alternatively be replaced with any possible name, for example, a sixth verification result or an authentication result. This is not limited.

S806: The NEF network element sends an AF authentication notification response (Naf_Auth_Notification Response) message #1 to the AF. Correspondingly, the AF receives the AF authentication notification response message #1 from the NEF network element.

The AF authentication notification response message #1 may indicate that device authentication on the terminal corresponding to the user succeeds, and the device identifier of the terminal corresponding to the user is associated with the user identity. For example, the AF authentication notification response message #1 may include the address of the user and the verification result #6, to indicate that device authentication on the terminal corresponding to the user succeeds, and the device identifier of the terminal corresponding to the user is associated with the user identity.

It may be understood that if the same user has the plurality of addresses, the AF authentication notification response message #1 may include each address of the user and the verification result #6 corresponding to the address. Alternatively, the AF authentication notification response message #1 may include only a plurality of verification results #6 that are in one-to-one correspondence with the plurality of addresses, and the verification results #6 are arranged in a default sequence, so that the AF can determine, based on an order of the verification results #6, that each verification result #6 is a verification result corresponding to which address.

S807: The AF sends an AF authentication notification request message #2 to the NEF network element. Correspondingly, the NEF network element receives the AF authentication notification request message #2 from the AF.

When device authentication on the terminal corresponding to the user succeeds, and the device identifier of the terminal corresponding to the user is associated with the user identity, the AF authentication notification request message #2 may indicate that the network allows the terminal corresponding to the user to continue to be attached to the network. For example, the AF authentication notification request message #2 may include the address of the user and indication information #7, to indicate that the network allows the terminal corresponding to the user to continue to be attached to the network. Alternatively, when device authentication on the terminal corresponding to the user fails, or when device authentication on the terminal corresponding to the user succeeds but the device identifier of the terminal corresponding to the user is not associated with the user identity, the AF authentication notification request message #2 may indicate that the network does not allow the terminal corresponding to the user to continue to be attached to the network, in other words, the network needs to disconnect the terminal corresponding to the user from the network. For example, the AF authentication notification request message #2 may include the address of the user and indication information #8, to indicate that the network needs to disconnect the terminal corresponding to the user from the network.

S808: The NEF network element sends an AF authentication notification response message #2 to the AF. Correspondingly, the AF receives the AF authentication notification response message #2 from the NEF network element.

The AF authentication notification response message #2 may be used to respond to the AF authentication notification request message #2, to be specific, indicate that the terminal corresponding to the user has continued to be attached to the network, or the network has disconnected the terminal corresponding to the user from the network.

It may be understood that S807 and S808 are optional steps. For example, when authentication on the device corresponding to the user succeeds, and the binding relationship is trusted, S807 and S808 may not be performed.

In conclusion, it can be learned from the procedure described in the scenario 6 that, the AF triggers the network to perform device authentication on the terminal, to ensure that the network continues to provide a corresponding service only when both an ME and a USIM are trusted, or both the user and the terminal corresponding to the user are trusted, and avoid a security risk.

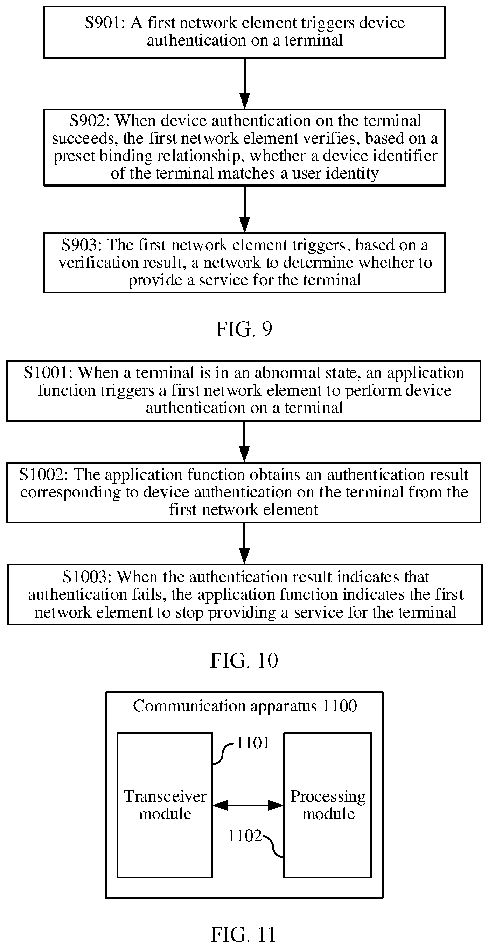

The foregoing describes, in detail with reference to FIG. 3 to FIG. 8, procedures of the communication methods, in various scenarios, provided in embodiments of this application. The following describes overall procedures of the communication methods with reference to FIG. 9 and FIG. 10.

For example, FIG. 9 is a schematic flowchart 7 of a communication method. The communication method mainly relates to a related procedure of a first network element. The first network element may be understood as the AMF network element in the scenario 1, the SMF network element in the scenario 2, the AAA server in the scenario 3 or the scenario 4, the external AAA server in the scenario 5, or the network function in the scenario 6.

As shown in FIG. 9, a procedure of the communication method is as follows.

S901: The first network element triggers device authentication on a terminal.

The first network element may send a first device authentication request message to the terminal, and receive a first device authentication response message from the terminal. The first device authentication response message includes a device identifier of the terminal and signature information of the device identifier of the terminal. In this way, the first network element may determine, based on the device identifier of the terminal and the signature information of the device identifier of the terminal, whether device authentication on the terminal succeeds. For example, the first network element may send a second device authentication request message to an authentication network element, and receive a second device authentication response message from the authentication network element. The second device authentication request includes the device identifier of the terminal and the signature information of the device identifier of the terminal, and the second device authentication response message includes an authentication result. In this way, the first network element may determine, based on the authentication result, whether device authentication on the terminal succeeds.

It may be understood that for a specific implementation of device authentication on the terminal, refer to the related descriptions in S305, S408, S505, S607, and S711. Details are not described again.

In a possible design solution, the first network element is an access management network element (the AMF network element in the scenario 1).

The first network element may obtain a user identity in a registration procedure of the terminal, to send a subscription data request message (the SDM obtaining request message in the scenario 1) to a data management network element (the UDM network element in the scenario 1). The subscription data request message includes the user identity. In this way, the first network element may receive a subscription information response message (the SDM obtaining response message in the scenario 1) from the data management network element, where the subscription information response message includes a binding relationship (the binding relationship #1 in the scenario 1), so that the first network element triggers device authentication on the terminal based on the binding relationship, in other words, the binding relationship may be reused to implicitly indicate the first network element to trigger device authentication on the terminal, to reduce overheads and improve communication efficiency. In addition, device authentication is triggered by reusing the registration procedure, so that it can be further ensured that the terminal is allowed to register with a network only when the authentication succeeds, to avoid a waste of resources caused by invalid registration.

Alternatively, the first network element obtains a user identity in a registration procedure of the terminal, and sends a subscription data request message to a data management network element. The subscription data request message includes the user identity. In this way, the first network element may receive a subscription information response message from the data management network element, where the subscription information response message includes a binding relationship and device authentication indication information (the indication information #1 in the scenario 1), where the device authentication indication information indicates that device authentication needs to be performed on a user, so that the first network element triggers device authentication on the terminal based on the device authentication indication information. It can be learned that device authentication is triggered by reusing the registration procedure, so that it can be further ensured that the terminal is allowed to register with the network only when the authentication succeeds, to avoid a waste of resources caused by invalid registration.

In addition, for a specific implementation of the design solution, refer to the related descriptions in S300a to S304. Details are not described again.

In a possible design solution, the first network element is a session management network element (the SMF network element in the scenario 2).

The first network element may obtain a user identity in a session establishment procedure of the terminal, and send a subscription data request message (the SDM obtaining request message in the scenario 2) to a data management network element (the UDM network element in the scenario 2). The subscription data request message includes the user identity. In this way, the first network element may receive a subscription information response message from the data management network element, where the subscription information response message includes a binding relationship (the binding relationship #1 in the scenario 2), so that the first network element may trigger, based on the binding relationship, an access management network element to perform device authentication on the terminal, in other words, the binding relationship may be reused to implicitly indicate the first network element to trigger device authentication on the terminal, to reduce overheads and improve communication efficiency.

Alternatively, the first network element obtains a user identity in a session establishment procedure of the terminal, and sends a subscription data request message to a data management network element. The subscription data request message includes the user identity. In this way, the first network element may receive a subscription information response message from the data management network element, where the subscription information response message includes a binding relationship and device authentication indication information (the indication information #1 in the scenario 2), where the device authentication indication information indicates that device authentication needs to be performed on a user, so that the first network element may trigger, based on the device authentication indication information, an access management network element to perform device authentication on the terminal.

It can be learned that the session management network element triggers the access management network element to perform device authentication on the terminal, to avoid a case in which the session management network element performs authentication, to reduce overheads of the session management network element and improve running efficiency; or the authentication may still be performed by the session management network element, or may be performed by any other possible network element. This is not limited. In addition, device authentication is triggered by reusing the session establishment procedure, so that it can be further ensured that the terminal is allowed to establish a session only when the authentication succeeds, to avoid a waste of resources caused by establishment of an invalid session.

In addition, for a specific implementation of the design solution, refer to the related descriptions in S400a to S404. Details are not described again.

In a possible design solution, the first network element is an AAA server.

The first network element may send device authentication indication information (the indication information #3 in the scenario 3) to an access management network element (the AMF network element in the scenario 3). The device authentication indication information is used to trigger the access management network element to perform device authentication on the terminal.

Optionally, before the first network element sends the device authentication indication information to the access management network element, the first network element may further receive a slice authentication request message (the slice authentication request message #1 in the scenario 3) from the access management network element, where the slice authentication request message includes a user identity, so that the first network element determines, based on the user identity, that device authentication needs to be performed on the terminal. Alternatively, optionally, before the first network element sends the device authentication indication information to the access management network element, the first network element receives an EAP authentication request message from the access management network element, where the EAP authentication request message includes a user identity, so that the first network element determines, based on the user identity, that device authentication needs to be performed on the terminal.

It can be learned that the first network element may trigger device authentication on the terminal by reusing a slice authentication procedure. In one aspect, additional signaling exchange can be avoided, and communication overheads can be reduced. In another aspect, it can be ensured that the terminal is allowed to obtain a service, for example, registration or session establishment, provided by a server function network element only when slice authentication succeeds, to avoid a waste of resources caused by providing an invalid service.

Optionally, after triggering the device authentication on the terminal, the first network element may further receive a device authentication response message (for example, the slice authentication request message #2 in the scenario 3) from the access management network element, where the device authentication response message includes the device identifier of the terminal and an authentication result, so that the first network element determines, based on the authentication result, whether device authentication on the terminal succeeds. It can be learned that the first network element may reuse the device authentication response message during device authentication to obtain the device identifier of the terminal, and does not need to obtain the device identifier additionally by using other signaling, to reduce a quantity of interaction times and improve communication efficiency.

In addition, for a specific implementation of the design solution, refer to the related descriptions in S500a to S506. Details are not described again.

In a possible design solution, the first network element is an AAA server.

The first network element may send device authentication indication information (the indication information #4 in the scenario 4) to a session management network element (the SMF network element in the scenario 4). The device authentication indication information indicates that an access management network element (the AMF network element in the scenario 4) needs to be triggered to perform device authentication on the terminal. In other words, even if the AAA server may not be able to directly communicate with the access management network element, the AAA server may still indicate the access management network element through the session management network element, to ensure that device authentication can be effectively triggered.

Optionally, before the first network element sends the device authentication indication information to the session management network element, the first network element may further receive a secondary authentication request message (the secondary authentication request message #1 in the scenario 4) from the session management network element, where the secondary authentication request message includes a user identity, so that the first network element determines, based on the user identity, that device authentication needs to be performed on the terminal. It can be learned that the first network element may trigger device authentication on the terminal by reusing a secondary authentication procedure. In one aspect, additional signaling exchange can be avoided, and communication overheads can be reduced. In another aspect, it can be ensured that the terminal is allowed to obtain a service, for example, registration or session establishment, provided by a server function network element only when secondary authentication succeeds, to avoid a waste of resources caused by providing an invalid service.

Optionally, after triggering device authentication on the terminal, the first network element may further receive a device authentication response message (the secondary authentication request message #2 in the scenario 4) from the session management network element, where the device authentication response message includes the device identifier of the terminal and an authentication result, so that the first network element determines, based on the authentication result, whether device authentication on the terminal succeeds. It can be learned that the first network element may reuse the device authentication response message during device authentication to obtain the device identifier of the terminal, and does not need to obtain the device identifier additionally by using other signaling, to reduce a quantity of interaction times and improve communication efficiency.

In addition, for a specific implementation of the design solution, refer to the related descriptions in S600a to S609. Details are not described again.

In a possible design solution, the first network element is an AAA server.

The first network element may send device authentication indication information (the indication information #5 in the scenario 5) to the authentication network element (the AUSF network element in the scenario 5). The device authentication indication information indicates that an access management network element (the AMF network element in the scenario 5) needs to be triggered to perform device authentication on the terminal. In other words, even if the AAA server may not be able to directly communicate with the access management network element, the AAA server may still indicate the access management network element through the authentication network element, to ensure that device authentication can be effectively triggered.

Optionally, before the first network element sends the device authentication indication information to the authentication network element, the first network element may further receive the authentication request message (the authentication request message #1 in the scenario 5) from the authentication network element, where the authentication request message includes a user identity, so that the first network element determines, based on the user identity, that device authentication needs to be performed on the terminal. In other words, the first network element may perform device authentication on the terminal during cooperating with the authentication network element to complete the authentication, or by reusing the authentication procedure, for example, a primary authentication procedure, to avoid performing another additional authentication procedure, to improve authentication efficiency.

In addition, for a specific implementation of the design solution, refer to the related descriptions in S700a to S711. Details are not described again.

In a possible design solution, the first network element may further receive an authentication notification request message (the AF authentication notification request message #1 in the scenario 6) from an application function (the AF in the scenario 6), where the authentication notification request message includes a user identity, so that the first network element triggers, based on the user identity, device authentication on the terminal. In other words, the application function may actively trigger device authentication on the terminal based on a requirement, and does not need to passively rely on a network, to improve authentication flexibility. In addition, the user identity is reused to implicitly indicate the first network element to trigger device authentication on the terminal, so that overheads can be further reduced, and communication efficiency can be improved.

Optionally, after triggering device authentication on the terminal, the first network element may send an authentication notification response message to the application function. The authentication notification response message indicates that authentication on the terminal succeeds, that is, indicates that the terminal is trusted, so that the application function can provide a corresponding service for the terminal.

In addition, for a specific implementation of the design solution, refer to the related descriptions in S800a to S806. Details are not described again.

S902: When device authentication on the terminal succeeds, the first network element verifies, based on a preset binding relationship, whether the device identifier of the terminal matches the user identity.

The user identity identifies a user who uses the terminal device to request a service from the network.

The first network element may obtain the binding relationship (the foregoing binding relationship #1 or the foregoing binding relationship #2) based on the device identifier of the terminal, to determine whether the user identity is consistent with an identity of an allowed user. The binding relationship includes the device identifier of the terminal and the identity of the allowed user, where the identity of the allowed user indicates a user allowed to use the terminal to request the service. Alternatively, that the first network element verifies, based on a preset binding relationship, whether the device identifier of the terminal matches the user identity includes: The first network element obtains the binding relationship based on the user identity, to determine whether the device identifier of the terminal is consistent with an identifier of an allowed terminal. The binding relationship includes the user identity and the identifier of the allowed terminal, where the identifier of the allowed terminal indicates a terminal allowed to be used by the user.

In other words, the first network element may use the device identifier to verify whether there is an identity that is of an allowed user and that matches the device identifier, or may use the user identity to verify whether there is an identifier that is of an allowed terminal and that matches the user identity. A specific manner to be used may be flexibly selected based on an actual situation.

In addition, for a specific implementation of S902, refer to the related descriptions in S306, S410, S507, S610, and S712. Details are not described again.

S903: The first network element triggers, based on a verification result, the network to determine whether to provide a service for the terminal.

In a possible design solution, the first network element is a network element inside the network, for example, the access management network element (the AMF network element in the scenario 1) or the session management network element (the SMF network element in the scenario 2). The first network element may directly provide a corresponding service for the terminal based on the verification result. For details, refer to the related descriptions in S306 or S410. Details are not described again. Alternatively, the first network element may trigger, based on the message of the application function, the network to provide the service for the terminal. For example, when the application function triggers device authentication on the terminal, whether the network provides the service for the terminal may still be indicated by the application function, to ensure that the network can provide the service as required. For details, refer to the related descriptions in S807 and S808. Details are not described again.

In a possible design solution, the first network element is the AAA server. The first network element may send the verification result to the access management network element (the AMF network element in the scenario 3), the session management network element (the SMF network element in the scenario 4), or the authentication network element (the SMF network element in the scenario 5). The verification result is used to trigger the network to determine whether to provide the service for the terminal. For example, when the verification result represents that the verification succeeds, the network determines to provide the service for the terminal, to ensure network security.

In addition, for a specific implementation of the design solution, refer to the related descriptions in S508 and S509, S611 and S612, and S713. Details are not described again.

In conclusion, the first network element may trigger device authentication on the terminal, and further verify a binding relationship between the device identifier of the terminal and the user identity after device authentication on the terminal succeeds, to improve security, meet a further security requirement, and avoid a security risk.

For example, FIG. 10 is a schematic flowchart 8 of a communication method. The communication method mainly relates to a related procedure of an application function. The application function may be understood as the AF in the scenario 6.

As shown in FIG. 10, a procedure of the communication method is as follows.

S1001: When a terminal is in an abnormal state, the application function triggers a first network element to perform device authentication on the terminal.

The first network element may be a function network element (the network function in the scenario 6). That a terminal is in an abnormal state includes at least one of the following: An account of the terminal is abnormal, or a service of the terminal is abnormal, to trigger device authentication on the terminal in a comprehensive manner.

Optionally, the application function may send an address of the terminal to the first network element. The address of the terminal is used to trigger the first network element to perform device authentication on the terminal. In other words, the address of the terminal may be reused to implicitly indicate the first network element to perform device authentication on the terminal, to reduce overheads and improve communication efficiency, or the first network element may be triggered to perform device authentication on the terminal in any other possible manner, for example, by using an SUCI of the terminal. This is not limited.

S1002: The application function obtains an authentication result corresponding to device authentication on the terminal from the first network element.

That the authentication result indicates that authentication fails means that the authentication result indicates that device authentication on the terminal fails. Optionally, that the authentication result indicates that authentication fails may further mean that a device identifier of the terminal does not match a user identity.

S1003: When the authentication result indicates that authentication fails, the application function indicates the first network element to stop providing a service for the terminal.

It should be noted that for specific implementation principles of S1001 to S1003, refer to the related descriptions in S800a to S808. Details are not described again.

In conclusion, when perceiving that the terminal is abnormal, the application function may indicate a network side, for example, the first network element, to perform device authentication on the terminal, so that when authentication fails, the network side is indicated to stop providing the service for the terminal, to avoid a security risk.

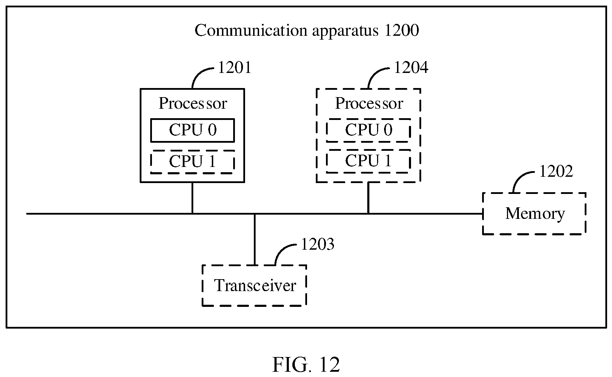

The foregoing describes, in detail with reference to FIG. 3 to FIG. 10, the communication methods provided in embodiments of this application. The following describes, in detail with reference to FIG. 11 and FIG. 12, communication apparatuses configured to perform the communication methods provided in embodiments of this application.

For example, FIG. 11 is a diagram 1 of a structure of a communication apparatus according to an embodiment of this application. As shown in FIG. 11, the communication apparatus 1100 includes a transceiver module 1101 and a processing module 1102. For ease of description, FIG. 11 shows only main components of the communication apparatus.

In some embodiments, the communication apparatus 1100 is applicable to the communication system shown in FIG. 2, and performs a function of the foregoing first network element.

The transceiver module 1101 may be configured to perform a function of receiving and sending a message by a first network element, for example, a function in step S901. The processing module 1102 may perform a function of the first network element other than receiving and sending the message, for example, a function in step S902. For example, the processing module 1102 is configured to: trigger device authentication on a terminal, and when device authentication on the terminal succeeds, verify, based on a preset binding relationship, whether a device identifier of the terminal matches a user identity. The processing module 1102 is further configured to control, based on a verification result, the transceiver module 1101 to trigger a network to determine whether to provide a service for the terminal. The user identity identifies a user who uses the terminal to request the service from the network.

Optionally, the transceiver module 1101 may include a sending module and a receiving module. The sending module is configured to implement a sending function of the communication apparatus 1100, and the receiving module is configured to implement a receiving function of the communication apparatus 1100.

Optionally, the communication apparatus 1100 may further include a storage module. The storage module stores a program or instructions. When the processing module 1102 executes the program or the instructions, the communication apparatus 1100 is enabled to perform the foregoing communication method.

It should be noted that the communication apparatus 1100 may be a first network element, may be a chip (system) or another part or component that may be disposed in the first network element, or may be an apparatus including the first network element. This is not limited in this application.

In addition, for technical effects of the communication apparatus 1100, refer to the technical effects of the foregoing communication methods. Details are not described herein again.

In some other embodiments, the communication apparatus 1100 is applicable to the communication system shown in FIG. 2, and performs a function of the foregoing application function.

The transceiver module 1101 may be configured to perform a function of receiving and sending a message by an application function. The processing module 1102 may perform a function of the first network element other than receiving and sending the message. For example, the processing module 1102 is configured to: when a terminal is in an abnormal state, control the transceiver module 1101 to trigger a first network element to perform device authentication on the terminal, and control the transceiver module 1101 to obtain, from the first network element, an authentication result corresponding to device authentication on the terminal, so that when the authentication result indicates that authentication fails, the transceiver module 1101 indicates the first network element to stop providing a service for the terminal.

Optionally, the transceiver module 1101 may include a sending module and a receiving module. The sending module is configured to implement a sending function of the communication apparatus 1100, and the receiving module is configured to implement a receiving function of the communication apparatus 1100.

Optionally, the communication apparatus 1100 may further include a storage module. The storage module stores a program or instructions. When the processing module 1102 executes the program or the instructions, the communication apparatus 1100 is enabled to perform the foregoing communication method.

It should be noted that the communication apparatus 1100 may be an application function, a chip (system) or another part or component that may be disposed in the application function, or an apparatus including the application function. This is not limited in this application.

For example, FIG. 12 is a diagram 2 of a structure of a communication apparatus according to an embodiment of this application. The communication apparatus may be a terminal, or a chip (system) or another part or component that can be disposed in the terminal. As shown in FIG. 12, the communication apparatus 1200 may include a processor 1201. Optionally, the communication apparatus 1200 may further include a memory 1202 and/or a transceiver 1203. The processor 1201 is coupled to the memory 1202 and the transceiver 1203, for example, may be connected to the memory 1202 and the transceiver 1203 through a communication bus.

The following describes in detail each component of the communication apparatus 1200 with reference to FIG. 12.

The processor 1201 is a control center of the communication apparatus 1200, and may be a processor, or may be a general name of a plurality of processing elements. For example, the processor 1201 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1201 may perform various functions of the communication apparatus 1200 by running or executing a software program stored in the memory 1202 and invoking data stored in the memory 1202, for example, perform the foregoing communication methods shown in FIG. 8 to FIG. 10.

During specific implementation, in an embodiment, the processor 1201 may include one or more CPUs, for example, a CPU 0 and a CPU 1 shown in FIG. 12.

During specific implementation, in an embodiment, the communication apparatus 1200 may alternatively include a plurality of processors, for example, the processor 1201 and a processor 1204 shown in FIG. 12. Each of the processors may be a single-core processor (single-CPU), or may be a multi-core processor (multi-CPU). The processor herein may be one or more devices, circuits, and/or processing cores configured to process data (for example, computer program instructions).

The memory 1202 is configured to store the software program for executing the solutions of this application, and the processor 1201 controls the execution. For a specific implementation, refer to the foregoing method embodiments. Details are not described herein again.

Optionally, the memory 1202 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 1202 may be integrated with the processor 1201, or may exist independently, and is coupled to the processor 1201 by using an interface circuit (not shown in FIG. 12) of the communication apparatus 1200. This is not specifically limited in this embodiment of this application.

The transceiver 1203 is configured to communicate with another communication apparatus. For example, the communication apparatus 1200 is the terminal, and the transceiver 1203 may be configured to: communicate with a network device or communicate with another terminal device. For another example, the communication apparatus 1200 is a network device, and the transceiver 1203 may be configured to: communicate with a terminal or communicate with another network device.

Optionally, the transceiver 1203 may include a receiver and a transmitter (not separately shown in FIG. 12). The receiver is configured to implement a receiving function, and the transmitter is configured to implement a sending function.

Optionally, the transceiver 1203 may be integrated with the processor 1201, or may exist independently, and is coupled to the processor 1201 by using an interface circuit (not shown in FIG. 12) of the communication apparatus 1200. This is not specifically limited in this embodiment of this application.

It should be noted that the structure of the communication apparatus 1200 shown in FIG. 12 does not constitute a limitation on the communication apparatus. An actual communication apparatus may include more or fewer components than those shown in the figure, combine some components, or have different component arrangements.

In addition, for technical effects of the communication apparatus 1200, refer to the technical effects of the communication methods in the foregoing method embodiments. Details are not described herein again.

An embodiment of this application provides a communication system. The communication system includes one or more terminals shown in FIG. 8 to FIG. 10.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. By way of example, and not a limitative description, random access memories (random access memories, RAMs) in many forms are usable, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented by using software, hardware (for example, a circuit), firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded or executed on a computer, a procedure or a function according to embodiments of this application is all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, such as the server or the data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually represents an "or" relationship between the associated objects, but may alternatively represent an "and/or" relationship. For details, refer to the context for understanding.

In this application, "at least one" means one or more, and "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not constitute any limitation on the implementation processes of embodiments of this application.

A person of ordinary skill in the art may be aware that in combination with the examples described in embodiments disclosed in this specification, units and algorithm steps can be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed systems, apparatuses, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
triggering, by a first network element, device authentication on a terminal;
when device authentication on the terminal succeeds, verifying, by the first network element based on a preset binding relationship, whether a device identifier of the terminal matches a user identity, wherein the user identity identifies a user who uses the terminal to request a service from a network; and
triggering, by the first network element based on a verification result, the network to determine whether to provide the service for the terminal.

2. The method according to claim 1, wherein the verifying, by the first network element based on a preset binding relationship, whether a device identifier of the terminal matches a user identity comprises:
obtaining, by the first network element, the binding relationship based on the device identifier of the terminal, wherein the binding relationship comprises the device identifier of the terminal and an identity of an allowed user, wherein the identity of the allowed user indicates a user allowed to use the terminal to request the service; and
determining, by the first network element, whether the user identity is consistent with the identity of the allowed user.

3. The method according to claim 1, wherein the verifying, by the first network element based on a preset binding relationship, whether a device identifier of the terminal matches a user identity comprises:
obtaining, by the first network element, the binding relationship based on the user identity, wherein the binding relationship comprises the user identity and an identifier of an allowed terminal, and the identifier of the allowed terminal indicates a terminal allowed to be used by the user; and
determining, by the first network element, whether the device identifier of the terminal is consistent with the identifier of the allowed terminal.

4. The method according to any one of claims 1 to 3, wherein the first network element is an access management network element, and the triggering, by a first network element, device authentication on a terminal comprises:
obtaining, by the first network element, the user identity in a registration procedure of the terminal;
sending, by the first network element, a subscription data request message to a data management network element, wherein the subscription data request message comprises the user identity;
receiving, by the first network element, a subscription information response message from the data management network element, wherein the subscription information response message comprises the binding relationship; and
triggering, by the first network element, device authentication on the terminal based on the binding relationship.

5. The method according to any one of claims 1 to 3, wherein the first network element is an access management network element, and the triggering, by a first network element, device authentication on a terminal comprises:
obtaining, by the first network element, the user identity in a registration procedure of the terminal;
sending, by the first network element, a subscription data request message to a data management network element, wherein the subscription data request message comprises the user identity;
receiving, by the first network element, a subscription information response message from the data management network element, wherein the subscription information response message comprises the binding relationship and device authentication indication information, and the device authentication indication information indicates that device authentication needs to be performed for the user; and
triggering, by the first network element, device authentication on the terminal based on the device authentication indication information.

6. The method according to any one of claims 1 to 3, wherein the first network element is a session management network element, and the triggering, by a first network element, device authentication on a terminal comprises:
obtaining, by the first network element, the user identity in a session establishment procedure of the terminal;
sending, by the first network element, a subscription data request message to a data management network element, wherein the subscription data request message comprises the user identity;
receiving, by the first network element, a subscription information response message from the data management network element, wherein the subscription information response message comprises the binding relationship; and
triggering, by the first network element based on the binding relationship, an access management network element to perform device authentication on the terminal.

7. The method according to any one of claims 1 to 3, wherein the first network element is a session management network element, and the triggering, by a first network element, device authentication on a terminal comprises:
obtaining, by the first network element, the user identity in a session establishment procedure of the terminal;
sending, by the first network element, a subscription data request message to a data management network element, wherein the subscription data request message comprises the user identity;
receiving, by the first network element, a subscription information response message from the data management network element, wherein the subscription information response message comprises the binding relationship and device authentication indication information, and the device authentication indication information indicates that device authentication needs to be performed for the user; and
triggering, by the first network element based on the device authentication indication information, an access management network element to perform device authentication on the terminal.

8. The method according to any one of claims 1 to 3, wherein the first network element is an authentication, authorization, and accounting AAA server, and the triggering, by a first network element, device authentication on a terminal comprises:
sending, by the first network element, device authentication indication information to an access management network element, wherein the device authentication indication information is used to trigger the access management network element to perform device authentication on the terminal.

9. The method according to claim 8, wherein before the sending, by the first network element, device authentication indication information to an access management network element, the method further comprises:
receiving, by the first network element, a slice authentication request message from the access management network element, wherein the slice authentication request message comprises the user identity; and
determining, by the first network element based on the user identity, that device authentication needs to be performed on the terminal.

10. The method according to claim 8, wherein before the sending, by the first network element, device authentication indication information to an access management network element, the method further comprises:
receiving, by the first network element, an extensible authentication protocol EAP authentication request message from the access management network element, wherein the EAP authentication request message comprises the user identity; and
determining, by the first network element based on the user identity, that device authentication needs to be performed on the terminal.

11. The method according to any one of claims 8 to 10, wherein the method further comprises:
receiving, by the first network element, a device authentication response message from the access management network element, wherein the device authentication response message comprises the device identifier of the terminal and an authentication result; and
determining, by the first network element based on the authentication result, whether device authentication on the terminal succeeds.

12. The method according to any one of claims 8 to 10, wherein the triggering, by the first network element based on a verification result, the network to determine whether to provide the service for the terminal comprises:
sending, by the first network element, the verification result to the access management network element, wherein the verification result is used to trigger the network to determine whether to provide the service for the terminal.

13. The method according to any one of claims 1 to 3, wherein the first network element is an AAA server, and the triggering, by a first network element, device authentication on a terminal comprises:
sending, by the first network element, device authentication indication information to a session management network element, wherein the device authentication indication information indicates that an access management network element needs to be triggered to perform device authentication on the terminal.

14. The method according to claim 13, wherein before the sending, by the first network element, device authentication indication information to a session management network element, the method further comprises:
receiving, by the first network element, a secondary authentication request message from the session management network element, wherein the secondary authentication request message comprises the user identity; and
determining, by the first network element based on the user identity, that device authentication needs to be performed on the terminal.

15. The method according to claim 13 or 14, wherein the method further comprises:
receiving, by the first network element, a device authentication response message from the session management network element, wherein the device authentication response message comprises the device identifier of the terminal and an authentication result; and
determining, by the first network element based on the authentication result, whether device authentication on the terminal succeeds.

16. The method according to any one of claims 13 to 15, wherein the triggering, by the first network element based on a verification result, the network to determine whether to provide the service for the terminal comprises:
sending, by the first network element, the verification result to the session management network element, wherein the verification result is used to trigger the network to determine whether to provide the service for the terminal.

17. The method according to any one of claims 1 to 3, wherein the first network element is an AAA server, and the triggering, by a first network element, device authentication on a terminal comprises:
sending, by the first network element, device authentication indication information to an authentication network element, wherein the device authentication indication information indicates that an access management network element needs to be triggered to perform device authentication on the terminal.

18. The method according to claim 17, wherein before the sending, by the first network element, device authentication indication information to an authentication network element, the method further comprises:
receiving, by the first network element, an authentication request message from the authentication network element, wherein the authentication request message comprises the user identity; and
determining, by the first network element based on the user identity, that device authentication needs to be performed on the terminal.

19. The method according to claim 17 or 18, wherein the triggering, by the first network element based on a verification result, the network to determine whether to provide the service for the terminal comprises:
sending, by the first network element, the verification result to the authentication network element, wherein the verification result is used to trigger the network to determine whether to provide the service for the terminal.

20. The method according to any one of claims 1 to 5, wherein the triggering, by a first network element, device authentication on a terminal comprises:
sending, by the first network element, a first device authentication request message to the terminal;
receiving, by the first network element, a first device authentication response message from the terminal, wherein the first device authentication response message comprises the device identifier of the terminal and signature information of the device identifier of the terminal; and
determining, by the first network element based on the device identifier of the terminal and the signature information of the device identifier of the terminal, whether device authentication on the terminal succeeds.

21. The method according to claim 20, wherein the determining, by the first network element based on the device identifier of the terminal and the signature information of the device identifier of the terminal, whether device authentication on the terminal succeeds comprises:
sending, by the first network element, a second device authentication request message to an authentication network element, wherein the second device authentication request comprises the device identifier of the terminal and the signature information of the device identifier of the terminal;
receiving, by the first network element, a second device authentication response message from the authentication network element, wherein the second device authentication response message comprises an authentication result; and
determining, by the first network element based on the authentication result, whether device authentication on the terminal succeeds.

22. The method according to any one of claims 1 to 3, wherein the triggering, by a first network element, device authentication on a terminal comprises:
receiving, by the first network element, an authentication notification request message from an application function, wherein the authentication notification request message comprises the user identity; and
triggering, by the first network element, device authentication on the terminal based on the user identity.

23. The method according to claim 22, wherein the method further comprises: sending, by the first network element, an authentication notification response message to the application function, wherein the authentication notification response message indicates that authentication on the terminal succeeds.

24. The method according to claim 22 or 23, wherein the first network element is a network element inside the network, and the triggering, by the first network element, the network to determine whether to provide the service for the terminal comprises:
triggering, by the first network element based on the message of the application function, the network to provide the service for the terminal.

25. A communication method, wherein the method comprises:
when a terminal is in an abnormal state, triggering, by an application function, a first network element to perform device authentication on the terminal;
obtaining, by the application function, an authentication result corresponding to device authentication on the terminal from the first network element; and
when the authentication result indicates that authentication fails, indicating, by the application function, the first network element to stop providing a service for the terminal.

26. The method according to claim 25, wherein that the authentication result indicates that authentication fails comprises that the authentication result indicates that device authentication on the terminal fails.

27. The method according to claim 25, wherein that the authentication result indicates that authentication fails comprises that a device identifier of the terminal does not match a user identity, and the user identity identifies a user who uses the terminal to request the service.

28. The method according to any one of claims 25 to 27, wherein the triggering, by an application function, a first network element to perform device authentication on the terminal comprises:
sending, by the application function, an address of the terminal to the first network element, wherein the address of the terminal is used to trigger the first network element to perform device authentication on the terminal.

29. The method according to any one of claims 25 to 28, wherein that a terminal is in an abnormal state comprises at least one of the following: an account of the terminal is abnormal, or a service of the terminal is abnormal.

30. A communication apparatus, wherein the apparatus comprises a module configured to perform the method according to any one of claims 1 to 29.

31. A communication apparatus, wherein the communication apparatus comprises a processor and a memory, the memory is configured to store computer instructions, and when the processor executes the instructions, the communication apparatus is enabled to perform the communication method according to any one of claims 1 to 29.

32. A communication system, wherein the communication system comprises the first network element according to any one of claims 1 to 24 and the application function according to any one of claims 25 to 29.

33. A computer-readable storage medium, wherein the computer-readable storage medium comprises a computer program or instructions, and when the computer program or the instructions are run on a computer, the computer is enabled to perform the communication method according to any one of claims 1 to 29.

34. A computer program product, comprising a computer program or instructions, wherein when the computer program or the instructions are run on a computer, the computer is enabled to perform the communication method according to any one of claims 1 to 29.
